(19) Europäisches Patentamt / European Patent Office / Office européen des brevets

(11) **EP 4 579 536 B1**

(12) **EUROPEAN PATENT SPECIFICATION**

(45) Date of publication and mention
of the grant of the patent:
**08.07.2026 Bulletin 2026/28**

(21) Application number: **24305087.9**

(22) Date of filing: **12.01.2024**

(51) International Patent Classification (IPC):
**G06N 10/20** (2022.01)     **G06N 10/70** (2022.01)

(52) Cooperative Patent Classification (CPC):
**G06N 10/70; G06N 10/20**

(54) **QUANTUM SYSTEM FOR PERFORMING A CLASSICAL LDPC ERROR CORRECTING CODE**

QUANTENSYSTEM ZUR DURCHFÜHRUNG EINES KLASSISCHEN
LDPC-FEHLERKORREKTURCODES

SYSTÈME QUANTIQUE POUR RÉALISER UN CODE DE CORRECTION D'ERREUR LDPC
CLASSIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.12.2023 EP 23307437**

(43) Date of publication of application:
**02.07.2025 Bulletin 2025/27**

(73) Proprietors:
• **Alice & Bob**
**75015 Paris (FR)**
• **INRIA - Institut National de Recherche en
Informatique et en Automatique**
**78150 Le Chesnay (FR)**

(72) Inventors:
• **RUIZ, Diego**
**75015 Paris (FR)**
• **GUILLAUD, Jérémie**
**75015 Paris (FR)**
• **MIRRAHIMI, Mazyar**
**78150 Le Chesnay (FR)**
• **LEVERRIER, Anthony**
**78150 Le Chesnay (FR)**

• **VUILLOT, Christophe**
**78150 Le Chesnay (FR)**

(74) Representative: **Atout PI Laplace
Immeuble Up On
25 Boulevard Romain Rolland
CS 40072
75685 Paris Cedex 14 (FR)**

(56) References cited:
• **BRAVYI SERGEY ET AL: "High-threshold and
low-overhead fault-tolerant quantum memory",
15 August 2023 (2023-08-15), pages 1 - 38,
XP093197260, Retrieved from the Internet
<URL:https://arxiv.org/pdf/2308.07915v1>
[retrieved on 20240822]**
• **LE R�GENT FRANCOIS-MARIE ET AL: "High-
performance repetition cat code using fast noisy
operations", 11 December 2023 (2023-12-11),
pages 1 - 20, XP093197289, Retrieved from the
Internet <URL:https://arxiv.org/pdf/2212.11927>
[retrieved on 20240822]**
• **RUIZ DIEGO ET AL: "LDPC-cat codes for low-
overhead quantum computing in 2D", 6 February
2024 (2024-02-06), pages 1 - 23, XP093197283,
Retrieved from the Internet <URL:https://arxiv.
org/pdf/2401.09541> [retrieved on 20240822]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention concerns a quantum system for performing a classical LDPC error correcting code.

A. General context

A1. General considerations relating to quantum systems error correction

Realizing a large-scale quantum computer is challenging because the noise induced by the uncontrolled interactions of the quantum computer's components with its environment destroys the fragile quantum characteristics responsible for quantum acceleration. Indeed, all algorithms whose quantum acceleration is theoretically proven require a certain level of protection against decoherence.

The theory of fault-tolerant quantum computing addresses this question. Quantum error correcting codes (QECC) are designed in such a way that errors induced by the environment do not affect the quantum information. These codes operate according to the principle "fighting entanglement with entanglement": as natural errors occurring in physical systems are generally local, the quantum information to be protected is coded in non-local entangled states, so that it becomes unlikely that errors could corrupt it. The most popular QECC is the surface code.

The heart of quantum fault tolerance theory is the threshold theorem: arbitrarily long quantum calculations can be performed reliably provided that the noise affecting the physical components of the computer is less than a constant value called the fault-tolerant error threshold.

In theory, QECCs provide, when operating below the fault-tolerance error threshold, arbitrarily good protection against noise, thereby solving the decoherence problem. However, their implementation in the physical world comes at the cost of enormous physical resources to achieve a level of sufficient protection. The trade-off between the degree of protection provided by a QECC and the increase in components required to implement it defines what is known as the "resource overhead problem".

Realistic approaches to quantum computing must address this problem. In this light, systems with continuous variables (such as a harmonic oscillator), in which an infinite-dimensional Hilbert space is readily available to protect and process quantum information, appear to have a head start over systems with discrete variables (DV) which only have a finite-dimensional Hilbert space. There are many different continuous variable encodings, usually involving the superposition of some specific states of a harmonic oscillator, such as position and momentum eigenstates (GKP qubits), Fock states, or coherent states (so-called cat qubits).

A2. QECCs and noise bias qubits

The invention relates more particularly to qubits exhibiting a noise bias.

Stabilized cat qubits are an example of bosonic qubits known to benefit from a noise bias. More precisely, an effective error channel (e.g., bit-flip errors) is suppressed exponentially with "size" - that is, the average number of photons - of the Schrodinger cat states. According to current knowledge, this suppression should apply to a large class of physical noise processes having a local effect on the phase space of a harmonic oscillator. This includes, but is not limited to, photon loss, thermal excitations, photon phase shift, and various nonlinearities induced by coupling to a Josephson junction. Recent experiments, in the context of superconducting quantum circuits, have made it possible to observe this exponential suppression of bit errors with the average number of photons in cat states.

Due to this noise structure, quantum error correction becomes similar in complexity to classical error correction. For instance, a certain level of quantum error correction can be achieved by using a repetition code.

A3. Repetition code

With cat qubits, the bitflip lifetime is much longer than the phase-flip lifetime, so a classical error correction code can be used. To stick with the literature about classical error correction, the codes will be referred to in the 0/1 basis and not the +/- basis as would be used for cat qubits. It should be noted that this is a just a notation formalism and all the following results apply to cat qubits by just changing "0" to " + " and "1" and " - ".

The goal of error correction is to protect information by encoding it redundantly. Some bitstrings are considered as valid codewords. The codewords live in the logical subspace and correspond to logical qubits: the "1" in the codeword is the support of the logical operator.

In error correction, the code distance is the minimum Hamming distance between any pair of codewords, i.e. the number of errors you need to go from a codeword to another, which is basically the number of bits which are different in the valid bitstrings. The number of errors that can be corrected is (d-1)/2 when d is an odd number (and the floor of this value when d is not not odd). Beyond this number of errors, the logical qubit are no longer protected. For example, if only 1 bitflip occurs in a 3 bits repetition code, then correction can accurately be made as the majority vote leads to the correct protected logical bit, whereas if there are 2 bit-flips then the majority vote would result in a failure.

An equivalent way is defining a code by its parity checks: if the logical bits are known, the parity checks can be deduced - and if the parity checks are known, the logical bits can be deduced. Again, with the example of a logical bit encoded by 3-bits, the sum of the first two bits are zero (modulo 2, i.e. for $1_L$ the sum of the first two bits is $1 + 1 = 2$ modulo $2 = 0$), and the sum of the last two bits are zero (modulo 2, i.e. for $1_L$ the sum of the first two bits is $1 + 1 = 2$ modulo $2 = 0$). The repetition code codewords satisfy the constraints of the parity checks. Therefore, if there is a single error in one of the logical bits (i.e. the code space for that logical bit is left), then the parity checks will flag the error.

This is important for quantum information, it is not the logical bits which are checked (i.e. we do not measure or look at whether the bits making up the logical bit are in 0's or 1's), but rather the parity measurements between pairs of the bits, which is precisely the parity check formalism. In the example above, at least one parity check between the qubits will result in a 1 if there is an error. This flag can thereafter be used to correct the error.

In practice, the parity checks actually require further physical qubits, usually named ancilla qubits. For instance, for a 3 bits repetition code with bits b1, b2 and b3, performing the b1+b2=0 parity check actually requires an ancilla qubit coupled to both b1 and b2 via CNOT gates.

The CNOT gate operates on a quantum register consisting of 2 qubits. The CNOT gate flips the second qubit (the target qubit) if and only if the first qubit (the control qubit) is 1.

Assuming the ancilla starts in value 0:

- if b1 is 0, then the ancilla stays 0 after a CNOT, and if b2 is 0, then the ancilla again stays 0 after a CNOT.
- if b1 is 1, then the ancilla flips from its initial 0 to 1 after a CNOT, and if b2 is also 1, then the ancilla again flips from its 1 back to 0 after a CNOT.

As a result, b1 + b2 = 0 for both 0+0 and 1+1 as required. However, if b1 is 1 then the ancilla flips from its initial 0 to 1 after a CNOT, and if b2 is 0, then the ancilla remains 1 after a CNOT. As a result, it is verified that 1+0 = 1.

Several articles propose using cat qubits in a QECC, either in a code entirely dedicated to phase-flip, or in a code which tolerates phase errors much better than bit errors (such as the rectangular surface code or XZZX surface code type), including: "Repetition Cat Qubits for Fault-Tolerant Quantum Computation" by Jérémie Guillaud and Mazyar Mirrahimi Phys. Rev. X 9, 041053, 12/12/2019; "Bias-Preserving Gates With Stabilized Cat Qubits" by Shruti et al., Science Advances, Vol 6, Issue 34, 08/21/2020; "Error Rates and Resource Overheads of repetition cat qubits" by Jérémie Guillaud and Mazyar Mirrahimi, Phys. Rev. A 103, 042413, 04/13/2021; "Building a Fault-Tolerant Quantum Computer Using Concatenated Cat Codes" by Christopher Chamberland et al.; PRX Quantum 3, 010329, 02/23/2022; or "Practical Quantum Error Correction with the XZZX Code and Kerr-Cat Qubits" by Andrew S. Darmawan et al., PRX Quantum 2, 030345, 09/16/ 2021.

A4. <u>Tackling the overhead problem of repetition codes</u>

The resource overhead problem can be seen as minimizing the number of physical qubits for a given number of logical qubits and a given distance of the code.

In order to encode a single logical qubit only, the repetition code is the best in terms of absolute numbers of qubits. However, when it comes to encoding a plurality of logical qubits, then the repetition code is limited by the fact that each physical qubit only contributes to a single logical qubit in the repetition code.

The performance of a code is given by a triplet of number [n,k,d]: n is the number of physical qubits (not including the ancillas for the parity checks) ; k is the number of logical qubits encoded and d is the distance of the code.

The repetition code is a [n,1,n] code. There exist some classical codes which improves upon the repetition code.

A5. <u>Quantum LDPC (qLDPC) error correction codes</u>

LDPC (low density parity check) are a family of codes where the stabilizer weight is constant as the distance or number of qubits increase, and wherein each data qubit participates in a constant number of stabilizers. The adaptation of LDPC codes to a quantum context, named qLDPC codes, have also been studied for quantum information.

A recent example is "High-threshold and low-overhead fault-tolerant quantum memory" by S. Bravi et. al., arXiv:2308.07915, 15 August 2023. However, this family of qLDPC codes require long-range interactions between qubits, which are undesirable given their practical unfeasibility. This family is also dedicated to protecting against both bit-flips and phase-flips, rather than being applied to noise-bias qubits as in the case of cat qubits. This family of qLDPC codes are directed to encoding a fault-tolerant quantum memory, but do not readily enable logical operations. However, the ability to perform logical operations between logical qubits is indispensable to a usable quantum computer.

Another example is "Constant-Overhead Fault- Tolerant Quantum Computation with Reconfigurable Atom Arrays" by Xu et al., arXiv:2308.08648, where qLDPC codes for Reconfigurable Atom Arrays were shown, as well as how to perform logical gates. Unfortunately, this architecture cannot be transposed to superconducting qubits.

As a result, there is no satisfying qLDPC architecture which can be used in the context of superconducting qubits.

The invention aims at improving the situation. To this end, the Applicant proposes a quantum system for performing a classical LDPC error correcting code according to claim 1.

This system is advantageous because it provides a QECC which has an increased kd/n value over the repetition code, which is applicable to cat qubits and more generally to bias noise superconducting qubits. This allows to significantly lower the number of qubits necessary to encode logical qubits and hence tackle the overhead problem.

In various embodiments, the claimed system is defined by the dependent claims 2-15.

Other features and advantages of the invention will readily appear in the following description of the drawings, which show exemplary embodiments of the invention and on which:

- Figure 1 shows a generic view of a quantum system for performing a classical LDPC error correcting code according to the invention using cat qubits,
- Figure 2 shows an example of how a cellular automaton rule is used in the context of the embodiment of Figure 1 with an L-shaped stabilizer motif,
- Figure 3 shows various stabilizer motif shapes which may be used according to the invention,
- Figure 4 shows a schematic view of the quantum system of figure 1 with the use of various stabilizer motifs,
- Figure 5 shows an example of a logical base group obtained by spanning an inverted T-shape stabilizer motif,
- Figure 6 shows an example of another logical base group obtained by spanning a cross-shaped stabilizer motif,
- Figure 7 shows an example of a logical group obtained by combining two logical base groups,
- Figure 8 various codes obtained by varying the stabilizer motifs and optimizing their allocation,
- Figure 9 shows exemplary error syndrome measurement operations performed by the system of figures 1 to 8 depending on the stabilizer motif shape,
- Figure 10 shows a generic view of a quantum system for performing a quantum gate using a classical LDPC error correcting code according to the invention, as well as a circuit equivalent view of the operations for performing a logical CNOT quantum gate,
- Figure 11 shows an exemplary manner to perform part of an operation of the logical CNOT quantum gate,
- Figure 12 shows an exemplary manner to perform part of an operation of the logical CNOT quantum gate,
- Figure 13 shows an exemplary flip chip architecture for manufacturing the quantum system of figures 10 to 12,
- Figure 14 shows an exemplary manner to perform a CNOT between a logical qubit encoded in a classical LDPC code and a repetition code in a routing circuit, and
- Figure 15 shows an exemplary manner to perform a CNOT between a repetition code in a routing circuit code and a logical qubit encoded in a classical LDPC.

## B. Cat qubits

So far, the Applicant's work has been generally concerned with the stabilization of cat qubits. As previously explained, R. Lescanne et *al.* (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of superconducting quantum circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

C. _Stabilization schemes_

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2 - \alpha^2)b^\dagger + \mathrm{h.c.}$, where b is the photon annihilation operator of the buffer mode b and $g_2$ is the two-photon coupling rate, by applying to the four-wave mixing device a pump at frequency | $2f_a$ - $f_b$| and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \mathrm{h.c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, $a$ is the photon annihilation operator, $\alpha$ is a complex number defining the cat qubit, $r$ and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{SC}\left(\left(\cosh(r)a + \sinh(r)e^{i\theta}a^\dagger\right)^2 - \alpha^2\right)b^\dagger + \mathrm{h.c.}$, where b is the photon annihilation operator of mode b and $g_{SC}$ is the squeezed two-photon coupling rate, with several pumps at frequencies |$2f_a$ - $f_b$|, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called _"moon cat qubit"_ since the two blobs of the Wigner function have a crescent moon shape - is stabilized by engineering the Hamiltonian $H/\hbar = g_2(a^2 + \lambda a^\dagger a - \alpha^2)b^\dagger + \mathrm{h.c.}$, where $g_2$ is the amplitude of a pump at frequency |$2f_a$ - $f_b$|, $a$ is the annihilation operator of the cat qubit mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/_\hbar = g_2(a^2 - \alpha^2)b^\dagger + \mathrm{h.\,c.}$, where b is the photon annihilation operator of the buffer mode b provided the mode frequencies verify substantially $2f_a = f_b$ and $g_2 < \kappa_b$ to which a drive of the buffer mode at frequency $f_b$ is added.

The present invention may implement any of these stabilization schemes to generate the data cat qubits and the ancilla qubits used in the quantum system implementing a classical LDPC error correcting code.

D. Quantum system for performing a classical LDPC code

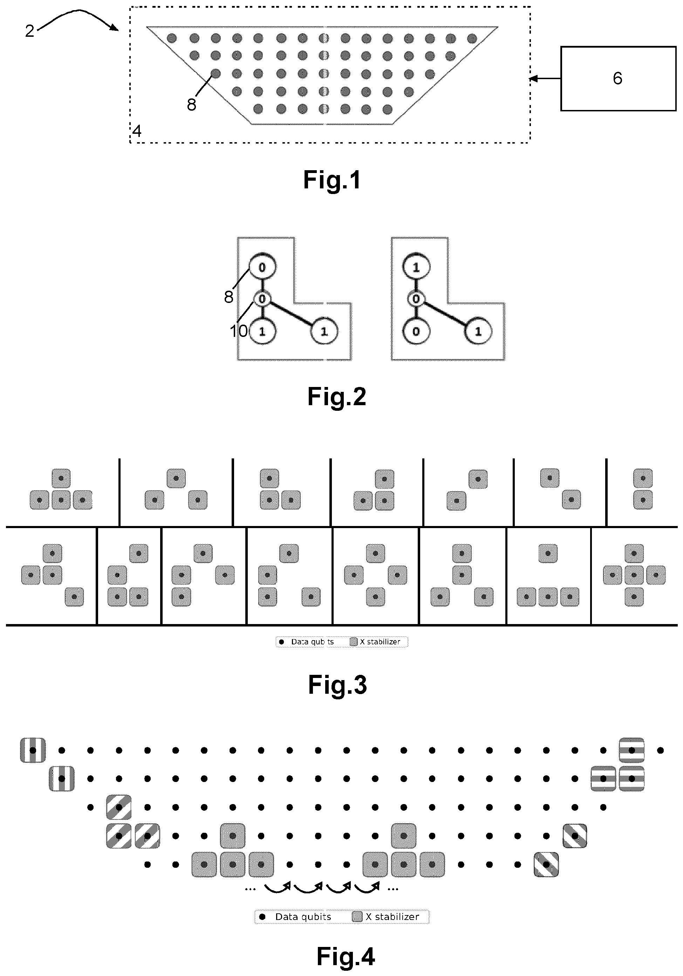

Figure 1 illustrates a quantum system 2 for performing a classical LDPC code.

As will appear below, the Applicant has discovered a design for a quantum system which allows to perform a classical LDPC code in which data cat qubits are basis elements of the code which allow to encode logical qubits. Due to the noise-bias of cat qubits, this error correcting code is designed to protect against phase-flips.

In the context of the invention, "data cat qubit" and "target qubit" are interchangeable and designate physical qubits which data is sought to be read, controlled or corrected. In the same way, "control cat qubit" and "ancilla qubit" are interchangeable and designate physical qubits which are used to read the photon parity of the data cat qubits for the above-mentioned purposes. In other words, by data cat qubit, it is meant that this physical qubit contains the quantum information that the classical LDPC code seeks to protect. By ancilla qubit, it is meant the complement of the data cat qubit in the classical LPCD code, i.e., this physical qubit is used to detect errors of the data cat qubit. In the following, the ancilla qubits will preferably be cat qubits. However, other types of qubits such as transmon, fluxonium or others can be used.

Further below, a quantum system implementing a classical LDPC code and allowing to perform logical CNOT gates between logical qubits will be described. The performance of the LDPC code or of the logical CNOT gates will involve performing CXX and MXX gates (or more generally $CX^s$ or $MX^s$ depending on the weight s of the stabilizers). In the following, the expression "CNOTNOT gate", "CNOTNOT quantum gate", "CXX gate" or "CXX quantum gate" can be used interchangeably. Further below, the same will be true for the expressions "MNOTNOT operation", "MNOTNOT quantum operation", "MXX operation" or "MXX quantum operation". This gates / operations can be performed sequentially, as it is conventionally known. Alternatively, they may also be made simultaneously, as taught by the Applicant in patent application EP 23305297.

As appears on figure 1, quantum system 2 comprises an LDPC superconducting quantum circuit 4, and a command circuit 6. LDPC superconducting quantum circuit 4 comprises data resonators 8 and ancilla resonators 10 not shown on figure 1.

In the example described herein, the command circuit 6 is arranged to selectively apply radiation to the data resonators 8 (respectively to the ancilla resonators 10) in such a manner that each data resonator 8 may stabilize a respective data cat qubit (respectively an ancilla qubit). The ancilla qubit may or may not be a data cat qubit. Advantageously, the ancilla qubit is a cat qubit.

As mentioned above, any stabilization scheme described in section C. above can be implemented by the command circuit 6 to stabilize the qubits. In the following, the expression "data resonator" (respectively "ancilla resonator") and "data cat qubit" (respectively "ancilla qubit") are interchangeable.

While command circuit 6 is herein described as a single element, it may be composed of a plurality of command circuits which are each connected to one or more resonators and allow to stabilize the qubits.

The LDPC superconducting quantum circuit 4 is realized such that the resonators used on the LDPC code are arranged on said LDPC superconducting quantum 4 circuit within a boundary having a substantially trapezoidal shape. Furthermore, within this boundary, the data resonators 8 are substantially aligned horizontally and vertically, thereby providing a grid-like geometry in which each data resonator and the corresponding data cat qubit substantially corresponds to the intersection of a row and a column of the grid-like geometry.

This geometry is advantageous because it allows to implement the classical LDPC code, and it further allows to prevent having to deal with periodic boundary conditions which are particularly detrimental in the actual implementations of quantum circuit comprising cat qubits. As will appear below, due to the nature of the classical LDPC code of the invention, if the boundary was rectangular, there would be a need to link the data resonators on the left-most column with some of the resonators on the rightmost column (and vice versa). In order to physically implement this connection, the quality of the error correction for the concerned logical qubits would be greatly damaged due to the difficulty to implement long range interactions between two cat qubits with high fidelity.

Of course, the above definitions are not absolute: the data cat qubits may in a few instances be on the boundary or even slightly out of it, and the grid-like geometry need not form a perfectly straightangled grid. Nonetheless, the more regular the geometry, the less problems will be encountered for manufacturing purposes and in view of the advantages provided in terms of regularity of the electromagnetic fields. Similarly, the quantum system 2 may comprise resonators outside the boundary, but unused for the realization of the LDPC code.

By substantially trapezoidal, it is meant that at least one of the sides of the boundary (e.g. the lefthand and right-hand sides in Figure 1) is not perpendicular to the bottom edge of the boundary. The trapezoidal side(s) also need not be perfectly straight lines, but may instead extend in a jagged or stepped fashion, which may be uniformly jagged/stepped or non-uniformly jagged/stepped. The trapezoidal sides may be symmetric with respect to each other, or alternatively may not be symmetric with respect to each other. What is important is that the trapezoidal sides enables the truncation of the grid-like geometry of data resonators at finite non-periodic boundaries, the form of which depends on the particular stabilizer motifs (discussed below) of the classical LDPC code, whilst maintaining the advantages of the classical LDPC code without resorting to the problematic implementation of periodic boundary conditions as discussed above.

Furthermore, as the number of columns in the grid-like geometry grows, the number of logical qubits encoded increases, and the substantially trapezoidal boundary looks more and more rectangular, all the while not having periodical boundary conditions. As a result, in the following, the periodical boundary conditions are ignored in some figures, and the boundary and the grid-like geometry are shown as rectangular for simplicity's sake.

The classical LPDC code of the invention is achieved by means of a cellular automaton rule, as shown on figure 2. In this figure, the most fundamental principle of the invention is shown.

The data cat qubits 8 are associated according to a stabilizer motif having a specific shape. In the following, it will appear the all stabilizer motifs are "pointy", i.e. they span across several rows of the grid-like geometry, and the data cat qubit in the upper row of the stabilizer motif comprises only one data cat qubit, hereinafter "the single data cat qubit". Furthermore, in order to adopt the formalism of classical LDPC codes, the values "0" and "1" are used to designate the measured states. However, due to the noise-bias of cat qubits, it will be in fact "+" and "-" states which will be encoded and monitored, so as to protect the logical qubits against phase-flips.

The single data cat qubit is arranged to store the parity of the other data cat qubits in the stabilizer motif. By using a cellular automaton rule to define the state of the single data cat qubit, the parity of the data cat qubits of the stabilizer motif can be measured in an ancilla qubit 10 and reflect the presence or the absence of an error:

- in the absence of an error in any of the data cat qubits of the stabilizer symbol, the parity check will return 0, since the value of the single data qubit is equal to the sum (modulo 2) of the two data qubits of the lower row.
- in the presence of an error, the parity check will return 1 and the parity checks of the neighboring stabilizers will allow to determine which of the data cat qubits of the stabilizer motif has failed.

The below table shows how the cellular automaton rule can be propagated from the bottom row, in the case where all data cat qubits are associated with a stabilizer motif of figure 2.

| 0 | 0 | 1 | 0 | 1 |
|---|---|---|---|---|
| 0 | 0 | 0 | 1 | 1 |
| 1 | 1 | 1 | 1 | 0 |
| 0 | 1 | 0 | 1 | 0 |
| 0 | 0 | 1 | 1 | 0 |

This type of encoding provides two significant advantages when implemented with cat qubits:

- it is a 2D local code, where each qubit laid out on a 2D chip interacts with its nearest neighbor. This is advantageous because it is harder to implement long range interactions between two qubits with high fidelity compared to nearest-neighbor interaction. This is also the reason why periodic boundary conditions have to be prevented.
- it requires the fewest possible number of crossing cables (a cable is required between qubits to make a CNOT gate between them) because crossing cables require either a flip chip architecture (if the cables can be divided into two subsets of non-overlapping cables) or air-bridges, which are hard to manufacture and generally suffer from lower fidelity.

Hence, by providing a substantially trapezoidal shape and by using cat qubits as elements of stabilizer motifs, the Applicant has discovered that it is possible to use a classical LDPC code to protect logical qubits. This is extremely surprising as classical LDPC codes can only protect against one type of errors, and are thus unsuitable for qubits. Furthermore, the presence of periodic boundary conditions associated with cellular automaton rule codes rendered them incompatible with cat qubit implementations.

Starting from this, the Applicant explored the possibilities associated with various stabilizer motifs. Figure 3 shows a set of stabilizer motifs which were tested by the Applicant and validated as offering a better kd/n value over the repetition code. These stabilizer motifs were chosen because they span over two or three consecutive rows and offer a low stabilizer weight.

The stabilizer weight, i.e. the number of physical bits in a single parity check, is also the number of data cat qubits 8 connected to the ancilla qubit 10 of the stabilizer. Since the parity check is a sequence of CNOT gates being performed between the ancilla qubit and each of the data cat qubits of the stabilizer motif, and since each CNOT gate takes a finite time, the more CNOT checks, the longer the parity check takes in time. And the longer the time of the parity check, the higher the chance an error occurs, notwithstanding the additional probability of error contributed by each CNOT performed. A high stabilizer weight thus results in the threshold of the code performance being very low, which is highly undesirable for quantum error correction. Consequently, a lower stabilizer weight is enviable, and a trade-off must be found with respect to the increase in the value kd/n.

On the first row of figure 3, the following stabilizer motifs are shown: inverted T-shape; inverted V-shape; L-shape; backwards-L-shape; trailing-diagonal; leading-diagonal; straight-line. Each stabilizer has a stabilizer weight of 2 or 3, and the columns of the data cat qubits of the lower row are less than two columns close to the column of the single data cat qubit.

On the second row of figure 3, various stabilizer motifs spanning over three rows, and the columns of the data cat qubits of the lower rows are less than two columns close to the column of the single data cat qubit.

During its research, the Applicant has recognized that stabilizer motifs which span over less than or equal to four rows and in which the data cat qubits of the lower rows are not distant by more than seven columns, and are each not distant by more than seven columns from the column of the single data cat qubit provide the best results in terms of optimizing the lowest stabilizer weight with the biggest kd/n value along with minimal length of connections between qubits of a stabilizer.

At first, the Applicant tested using a single stabilizer motif for all data cat qubits (except on the sides of the substantially trapezoidal boundary to prevent the periodic boundary conditions). In doing so and testing the distances of the resulting codes, the Applicant identified that the "inverted T-shape" stabilizer motif is particularly interesting.

The Applicant further discovered that the classical LDPC code resulting from applying the cellular automaton rule to the stabilizer shapes from the ground up allows to characterize the LPDC code by means of logical base groups.

Indeed, the data cat qubits which are part of the bottom row of the grid-like geometry cannot be the single data cat qubit of a stabilizer motif. These data cat qubits constitute "logical base data cat qubits", as a change in their value will change the values of the data cat qubits of the rows above them. This is also the case for other data cat qubits in the rows above the bottom of the grid-like geometry, when the height of the stabilizer motifs used is greater than two.

By virtually setting a chosen logical base data cat qubit with a state opposite to that of all the other logical base data cat qubits, and by applying the cellular automaton rule on all data cat qubits of the others rows to determine respective virtual states, with the cellular automaton rule being determined for each data cat qubit by the stabilizer motif for which this data cat qubit is the single data cat qubit, one can identify which data cat qubits in the LDPC code are influenced by flipping the chosen logical base data cat qubit. Thereafter, the data cat qubits which have the same virtual state can be used to define a logical base group associated with the chosen logical base data cat qubit.

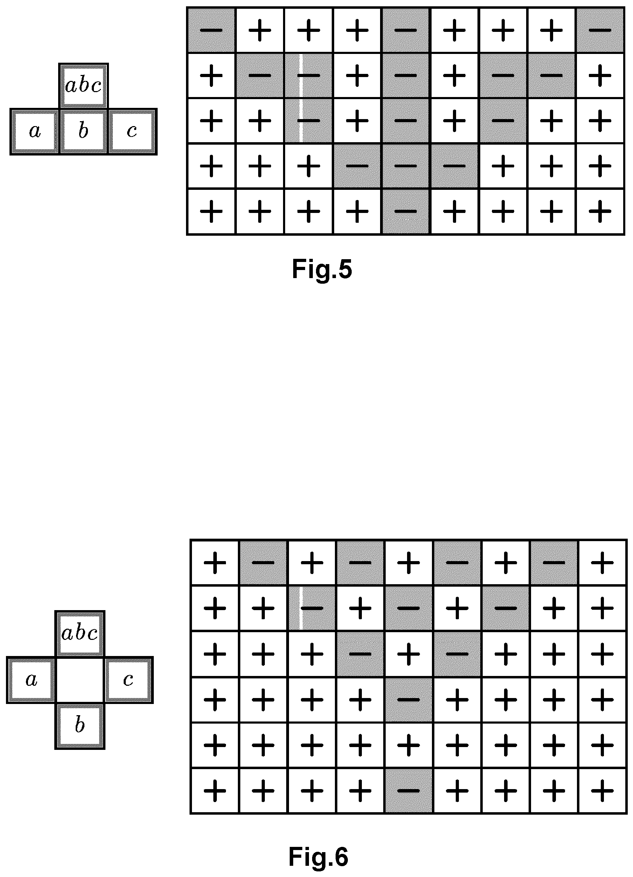

Figure 5 illustrates the determination of a logical base group for an inverted T-shape stabilizer motif. Because the inverted T-shape stabilizer motif spans over two consecutive rows, the bottom row of the grid-like geometry receives the logical base data cat qubits.

In this figure, the fifth logical base data cat qubits is the chosen one, and its state is set with "-", whereas all of the other logical base data cat qubits are set with "+". By propagating the cellular automaton rule shown on the left of this figure, a trident-like group of data-cat qubits having the state "-" are identified. This group of data-cat qubits is herein referred to a logical base group which defines the support of a logical operator. Indeed, this group of data cat qubits have to all be changed together to reflect a change in the state of the logical qubit to which they are associated.

Figure 6 is similar to figure 5, but in the case of a cross-shaped (excluding the center of the cross) stabilizer motif. It will also appear that, by using stabilizer motifs spanning over more than two rows, the logical base data cat qubits can be located on several of the bottom rows of the grid-like geometry.

By furthering its research, the Applicant discovered that logical base groups can be combined between them to provide logical groups. Similarly to logical base groups, logical groups define a logical operator, and concretely designate which data cat qubits within the LDPC superconducting quantum circuit are used to protect a given logical qubit. However, contrary to logical base groups, they may comprise several logical base data cat qubits, as shown on figure 6.

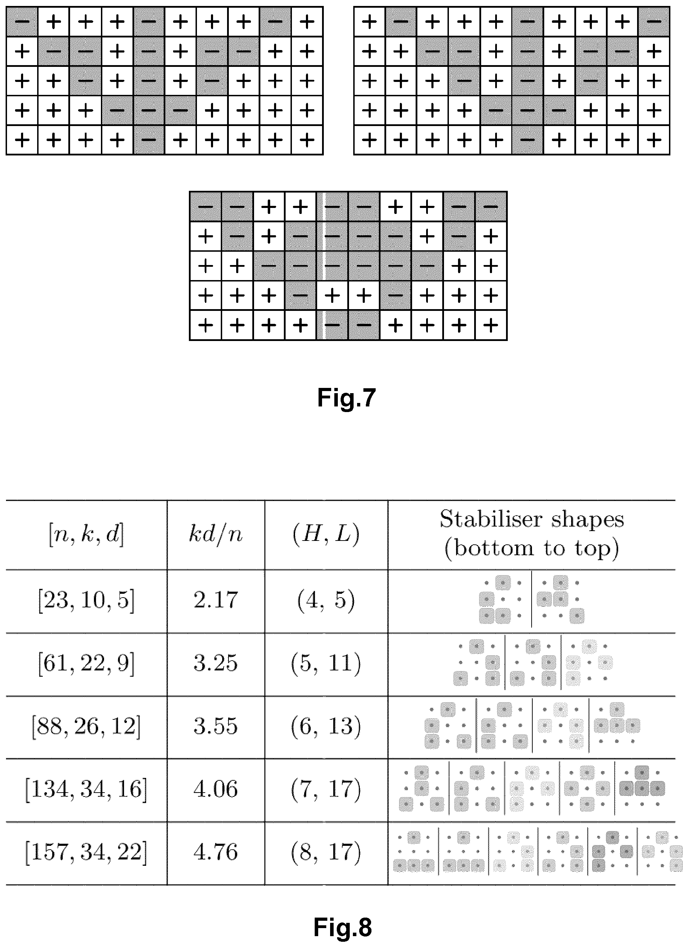

Figure 7 shows how two logical base groups, here the logical base groups associated respectively to the fifth and the sixth logical base data cat qubits (shown on top), can be combined to form a logical group (shown below). The only condition to be respected is that the logical groups should form a free base. This means that no logical group shall be obtainable by combining any number of the other logical groups.

As this figure shows, the combination of two logical base groups is obtained by superposing their respective graphs, with the following conditions: 0+0 becomes 1, 1+1 becomes 0, 0+1 and 1+0 become 1. The same will apply to the combination of more than two logical base groups.

Based on this, it is thus possible to generate a very wide variety of classical LDPC codes which use data cat qubits to protect the phase of logical qubits. By comparing the distance between the $2^k$ codewords which can be made by summing the logical groups, the respective distance of these classical LDPC codes can be determined, and specific codes having the highest distance with the lowest weights can be determined.

The Applicant has identified that it is nevertheless preferable to have logical groups which correspond to logical base groups for the following reasons:

- the logical base groups have only one logical base data cat qubit, which bears the X operator of the logical qubit. The less operations, the less risk.
- as will appear below, it is more complicated to perform a CNOT gate between logical qubits when they have several logical base data cat qubits.

By yet pushing his research, the Applicant also discovered that, while the suppression of the periodic boundary conditions requires that some of the stabilizer motifs be different, that is that, contrary to all known codes, the stabilizer motifs are not the same for all of the data cat qubits of the classical LDPC code, it can be in fact extremely beneficial to have a high variety of stabilizer motifs, even "in the middle" of the classical LDPC code.

For this reason, the Applicant explored several variants, such as:

- using a single stabilizer motif for substantially all of the data cat qubits of each row (the stabilizer motifs being different for at least some of the rows),
- using any kind of stabilizer motif anywhere in the classical LDPC code.

By substantially all data cat qubits of a given row have the same stabilizer motif, it will be understood that the outer-most stabilizers at each end of the row may be different from those in the middle of the row. The outer-most stabilizers at each end of the row may be the end-most stabilizers (for instance, if the stabilizers in the middle of the row span over three columns), or several adjacent stabilizers finishing at the end-most stabilizer (for instance, if the stabilizers in the middle of the row span over more than three columns).

The analysis of the resulting classical LDPC codes showed that these designs allow to even further improve the distance of the resulting code while maintaining an interesting average stabilizer weight. In order to choose the best stabilizer motif mix, the Applicant used brute force where possible, and a SAT solver in other cases. The use of SAT solvers is well known in the art.

A SAT solver takes as input Boolean variables (0 or 1) and a set of constraints that must be satisfied at the same time, and outputs possible values of this Boolean variables that satisfy the constraints. If the problem is impossible the SAT solver will tell it.

In the present case, the variables are the stabilizer shapes. Typically when doing stabilizer shapes on three lines and three columns, there are $2^6$ possibilities for a single shape which can be represented by 6 boolean variables. If all stabilizers are chosen to have the same shape for each given line, this has to be multiplied by the number of lines. If more freedom is allowed on the stabilizer choices, the number will further increase. Then the constraints are that the distance between the codewords must be bigger than a certain number. So the number of constraints is $2^{(\text{number of logical qubits})}$.

The Applicant applied a method for designing the quantum system 2, by:

- inputting maximum height and length dimensions of the two-dimensional array;
- inputting plurality of different cellular element shapes (e.g. constraints of weight 4, fits in 3x3 array);
- use a SAT solver to provide cellular automaton combination of elements providing the largest possible distance d of the code.

Figure 8 shows results obtained by applying this method. This table shows, for various values of [n, k, d], kd/n values obtained, corresponding height and width of the grid-like geometry used, as well as the type of stabilizers used to obtain this kd/n value.

From the above, it appears that there are many ways to generate a classical LDPC code using at least two stabilizer motifs and which have a kn/d value which is greater than 1 (that is which perform more favorably than a conventional repetition code). In many cases, brute force can be used, and in other cases, an SAT solver can be used.

E. Error syndrome measurement

Once all the stabilizers are chosen to define the classical LDPC code, one needs to perform the error syndrome measurement in order to truly protect the logical qubits against phase-flips.

As explained above, this is done by measuring the parity of the data qubits within each stabilizer motif.

Advantageously, all of the error syndrome measurements can be performed substantially in parallel. The only constraint is that a given data cat qubit can only participate in a single parity check for each timestep. This means that patterns of parity check orders have to be adapted for neighboring stabilizer motifs.

The error measurement syndrome may be performed conventionally, for example by repeatedly preparing the ancilla qubit of each stabilizer motif in a "|-⟩" or "|+⟩" state, performing quantum gates with the data cat qubits of the stabilizer motif, and measuring the associated ancilla to determine the presence of a phase-flip. In an alternative embodiment, the error syndrome can be improved by performing asynchronous CXXX operations (or more in the case of higher stabilizer weights), such that each data cat qubit is used at most in one such CXXX operation for a given timestep.

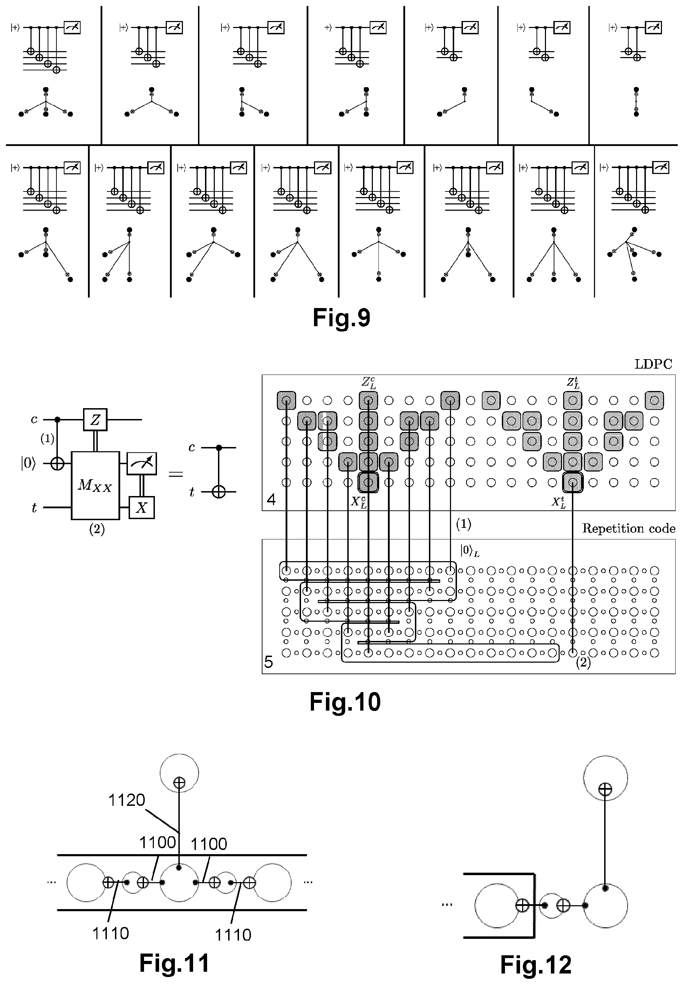

Figure 9 shows, for various stabilizer motif shapes, how the ancilla resonator 10 can be placed on the LDPC superconducting quantum circuit 4 with respect to the data cat qubits 8 in view of the stabilizer motif shape, as well as the kind of steps which can be conventionally executed to measure the error syndrome in each case.

### F. Logical quantum gates

### F1. Principles

Due to the nature of the classical LDPC code, the X gate and the Z gate can easily be performed on the encoded logical qubits:

- The logical X gates need only be performed on the bottom-most qubits of the logical groups of the logical qubit, or the logical X group as explained below,
- The logical Z gates need only be performed on the data cat qubits of the logical group of the logical qubit.

However, both the potential distance and the fact that each data cat qubit participates in several logical groups make the performance of logical CNOT gates complex. However, the Applicant designed a quantum system and a method which a specifically tailored to performing a CNOT gate on the classical LDPC code.

### F2. CNOT quantum gate between logical qubits encoded in a classical LDPC code

Figure 10 shows an exemplary embodiment of such a quantum system. System 20 comprises two circuits:

- The LDPC superconducting quantum circuit 4 of figures 1 to 9 (or LDPC circuit 4), and
- A routing superconducting quantum circuit 5 (or routing circuit 5).

As appears on the right part of figure 10, the data resonators of the routing circuit 5 are represented by big circles, whereas the ancilla resonators are represented by small circles. The ancilla resonators of LDPC circuit 4 are not shown for simplicity's sake, but they have been represented on figure 3.

The routing circuit 5 comprises the same number of data resonators as the LDPC circuit 4. Indeed, each data resonator of the LDPC circuit 4 is directly connected to a corresponding data resonator of the routing circuit 5.

Advantageously, the data resonators of the routing circuit 5 are arranged similarly to the data resonators of the LDPC circuit 4, such that the grid-like geometry applies similarly to both the LDPC circuit 4 and the routing circuit 5. Not only does this make determination of the below defined path easier, but it also guarantees that the links between the LDPC circuit 4 and the routing circuit 5 will all be more or less identical, or at the very least similar in length and nature, thus ensuring homogeneous behavior of these links.

If this condition is not met, the correspondence of the data resonators with the LDPC circuit 4 and the routing circuit 5 will need to be closely monitored and controlled when designing the below defined path.

However, the routing circuit 5 is different when it comes to the ancilla resonators. In the example described here, each ancilla resonator is connected to at least two and at most four data resonators of the routing circuit 5, such that it is possible to make a single continuous path which connects all data cat qubits of the routing circuit 5, which path alternates data cat qubits and ancilla qubits, each data cat qubit in said path being connected to its neighboring ancilla qubit(s) in the path, and the path never comprising twice the same data cat qubit or the same ancilla qubit.

More generally, substantially all data cat qubits are connected to at least two ancilla qubits, and substantially all ancilla qubits are connected to at least two data cat qubits, such that a continuous path can be defined in the routing circuit 5 which connects any two data cat qubits and is comprised of pairs of data cat qubits which are connected via an ancilla qubit. In this manner, it is possible to create a repetition code connecting any two data cat qubits in the routing circuit 5.

There are several manners to provide for the above limitation. For example, routing circuit 5 may comprise one ancilla qubit connecting every two data cat qubits which are neighbors horizontally or vertically in the grid-like geometry. Alternatively, some ancilla qubits can be connected to 3 or 4 data cat qubits, as long as it allows to ensure that no ancilla qubit can be subject to two CNOT operation from different data cat qubits at the same time. In some cases, this can also be obtained by time multiplexing CNOT operations, with the disadvantage of complicating the operation design and increasing the operating time of the logical CNOT (and hence the risks of the logical CNOT undergoing an error in this added operating time).

The principles for applying a CNOT gate are shown on the left part of figure 10. This part shows that applying a logical CNOT gate between a control logical qubit $Z_L^c$ and a target logical qubit $Z_L^t$ can be performed in 4 operations:

a) The routing circuit 5 undergoes a preparation phase in which a continuous path is determined in the routing circuit 5, and in which the data cat qubits of that path are initialized with a $|0\rangle_L$ state of a repetition,

b) The states of the data cat qubits of the logical group of the control logical qubit are mapped on their corresponding data cat qubits in the routing circuit 5 - this operation is referenced (1) on the left part of figure 10, as well as on the right part of figure 10,

c) A MXX operation is selectively performed between chosen data cat qubits of the path and chosen data cat qubits of the routing circuit 5 which correspond to the logical base data cat qubit(s) of the logical group of the target logical qubit - this operation is referenced (2) on the left part of figure 10, as well as on the right part of figure 10, and

d) Conditionally on the result of the MXX operation, and on the result of a MZ operation, adaptation operations are applied physically or in software form on the control logical qubit and the logical base data cat qubit(s) of the logical group of the target logical qubit.

All of these operations will now be described in greater detail.

F2.1. <u>Operations a and b</u>

The most fundamental parts of performing the CNOT lie in operations b) and c). Operation a) aims at providing a way to produce a "copy" of the control logical qubit in the routing circuit 5, by first entangling together data cat qubits of the routing circuit 5 and initializing them with a $|0\rangle_L$ state of a repetition code.

In order to do so, it is necessary to provide a continuous path (hereinafter the "routing path"), which passes by all data cat qubits of the routing circuit 5 associated with a data cat qubit of the logical group of the control logical qubit and which does not cross over itself. This may be done in various manners, depending on the topology of the ancilla qubits as described above. In the case where the routing circuit 5 comprises one ancilla qubit connecting every two data cat qubits which are neighbors horizontally or vertically in the grid-like geometry, it will be fairly simple to provide the shortest path possible, starting from leftmost or rightmost data cat qubit of the logical group of the control logical qubit in the top row of the grid-like geometry. The man-skilled in the art will readily identify many ways in which the routing path can be determined. These ways will of course vary depending on the repartition of the ancilla qubits in the routing circuit 5, as explained above. The aim of this routing path is to provide a repetition code which will receive the states of the control logical qubit and allow to interact with the target logical qubit to perform the CNOT gate without damaging the classical LDPC code.

The end of the routing path may vary depending on the target logical qubit. Indeed, when the LDPC circuit 4 is initialized, all of its data cat qubits are brought to a $|0\rangle_L$ state by first initializing the data cat qubits with a $|0\rangle$ state and then measuring all of the stabilizer operators. This has as a consequence to entangle all of the qubits of the code (the $|0\rangle_L$ or $|1\rangle_L$ state is a completely entangled state). This is not the case for the $|+\rangle_L$ or $|-\rangle_L$, which are separable states, which is a consequence of the classical LDPC structure. Other methods can be used to initialize the LDPC circuit 4, but they will lead to the same consequence.

As a result, the value of the logical X operator of a target logical qubit is not carried in a single group of qubits like with the Z information and the logical groups $Z_L^c$ and $Z_L^t$ shown in grey on figure 10. On the opposite, the X information is carried by many different groups of qubits which obey the following rule: a set of qubits of the LDPC circuit 4 constitute a logical X group for a given logical qubit if the qubits in this set of qubits share an odd number of qubits with the logical group of the given logical qubit, and an even number of qubits with all other logical groups in the LDPC circuit 4. This is a necessary and sufficient condition to ensure that the logical X operator of this given logical qubit anti-commutes with the corresponding logical Z operator, while commuting with all of the other logical Z operators of the other logical qubits.

The determination of logical X groups according to this rule is equivalent to multiplying the logical base data cat qubits of the logical group of the given logical qubit by any combination of stabilizer motifs as defined by their position in the grid-like geometry of the LDPC circuit 4. Incidentally, such as shown with the logical X group $X_L^c$ of the control logical qubit, and with the logical X group $X_L^t$ of the target logical qubit, the case of a logical group having a single logical data qubit directly verifies the above defined rule.

As a result, performing operation c) can be very different depending on the logical X group $X_L^t$ which is chosen to carry out the MXX operation on the target logical qubit. More specifically, it readily appears that the logical X group $X_L^t$ of the target logical qubit $X_L^t$ of the target logical qubit may contain many data cat qubits which can be almost anywhere on the LDPC circuit 4. Hence, there are three possibilities:

- All of the data cat qubits of the logical X group chosen to perform the MXX operation are part of the routing path of operation a)
- At least one data cat qubits of the logical X group chosen to perform the MXX operation is not part of the routing path of operation a)
- None of the data cat qubits of the logical X group chosen to perform the MXX operation are part of the routing path of operation a).

The latter case will in practicality be reduced to the case where a single data cat qubit of the logical X group chosen to perform the MXX operation is not part of the routing path of operation a). Indeed, in the contrary, there will be a need to join all of the target cat qubits of the logical X group which are not part of the of the routing path of operation a), and to put them in a GHZ state in order to perform the MXX operation. This is disadvantageous because the operations on GHZ states are known to suffer from a poor fidelity.

Consequently, the three above possibilities define the three following alternatives:

A) The routing path contains all of the data cat qubits of the logical X group. In this case the routing path may end at a data cat qubit of the routing circuit 5 which is associated to the lowest and rightmost or leftmost data cat qubit of the logical group of the control logical qubit. Other routing path shapes can be envisaged.

B) The routing path contains all of the data cat qubits of the logical X group but one, and the routing path is designed to end at a data cat qubit of the routing circuit 5 (hereinafter the "end path qubit") which is a neighbor of the data cat qubit in the routing circuit 5 (hereinafter the "routing target qubit") which is connected to the one data cat qubit of the logical X group which is not in the routing path (hereinafter the "main target qubit").

C) The logical X group contains a single data cat qubit, and it is not in the routing path.

In the example shown on figure 10, as the logical X group $X_L^t$ of the target logical qubit is made of a single data cat qubit (the main target qubit). In this case, the end path qubit which is the neighbor horizontally or vertically in the grid-like geometry of the routing target qubit. This is most advantageous because it provides for the shortest routing path in the routing circuit 5, and also for the simplest realization in operations b), c) an d).

In the example shown on figure 10, the routing path is the serpentine shown in the routing circuit 5, and it ends next to the routing target qubit.

In any case, after the routing path has been determined in the routing circuit 5, its data cat qubits are set with a $|0\rangle$ state, and the stabilizers of the repetition code are measured using the ancillary qubits connecting pairs of data cat qubits such that the data cat qubits are put in a $|0\rangle_L$ state. The ancilla qubits of the routing path are crucial as they are necessary to implement the repetition code to obtain the $|0\rangle_L$ state in the data cat qubits of the path.

Operation b) aims at "reproducing" the state of the control logical qubit state in the routing circuit 5. To do this, a CNOT is performed between each of the data cat qubits of the logical group $Z_L^c$ of the control logical qubit and its associated data cat qubit in the routing path, with the data cat qubits of the control logical qubit being the control and the data cat qubits of the routing circuit 5 being the target.

Operation b) can be performed simultaneously for all of the data cat qubits of the routing circuit 5. This operation "transfers" the states of the control logical qubit to its equivalent in the routing path in the routing circuit 5. Because of the repetition code performed in operation a), the data cat qubits of the routing path are entangled, and this transfer reflects in all data cat qubits of the routing path, up to the end path qubit.

Operation c) will be performed differently for each of the above described alternatives.

F2.2. Operations c and d - Alternative A

According to alternative A), the routing path contains all of the data cat qubits of the logical X group. In the example described here, the routing path ends at a data cat qubit of the routing circuit 5 which is associated to the lowest and rightmost data cat qubit of the logical group of the control logical qubit.

For this reason, a MXXX or MXX operations will be executed on each of the data cat qubits in the routing circuit 5 which are connected to the data cat qubits of the logical X group $X_L^t$ of the target logical qubit (hereinafter the "internal routing target qubits") as shown on figure 11. The expression "internal routing target qubit" is used to designate the fact that these are qubits relating to the target logical qubit which are included in the routing path.

The MXXX operation can be carried out as follows:

c1) the internal routing target qubits undergo a MX operation in order to disentangle them from the repetition code, and to prepare them with a $|+\rangle$ state. At a different time, or simultaneously, the two ancilla qubits surrounding the internal routing target qubits undergo a MZ operation in order to disentangle them from the repetition code, and to prepare them with a $|0\rangle$ state.

c2) In an operation 1100, a first CNOT gate is made between each pair of prepared ancilla qubits and each internal routing target qubit, with the ancilla qubits being the target and the internal routing target qubits being the control,

c3) In an operation 1110, a second CNOT gate is made between each pair of prepared ancilla qubits and each neighboring data cat qubit in the routing path, with the ancilla qubits being the control and the neighboring data qubits being the target, and in a preferred manner, a third CNOT gate is made simultaneously in an operation 1120 between the data cat qubit of LDPC circuit 4 connected to the internal routing target qubit and the internal routing target qubits, with the former being the target and the latter being the control. Incidentally, the second CNOT and third CNOT can be done asynchronously.

c4) The internal routing target qubit and the two ancilla qubits undergo an MX operation, and their results are multiplied together to determine the value MXXX.

As conventional with MX operations, these steps may be repeated several times, until a result is chosen by majority voting.

As mentioned above, this measurement should be performed on all of the internal routing target qubits. However, because all of the internal routing target qubits are inside the routing path, the bilateral X measurements via the ancilla qubits cancel each other out for MXXX purposes, and it is necessary to perform operations c1) to c4) with a single ancilla qubit and its corresponding neighboring data cat qubit instead of on both, resulting in a MXX operation instead of a MXXX operation for one of the internal routing target qubits.

After the MXXX operations and the MXX operation have been performed, their results are multiplied to provide a MXX result.

Thereafter, operation d) can perform the following optional operations:

- d1) if the value of the MXX result is "-1", a Pauli-Z gate is applied on the data cat qubits of the logical group of the control logical qubit,
- d2) The state Z of all of the data cat qubits in the routing path - excluding the internal routing target qubits - are measured and multiplied, and, if the result of operation d2) is "-1", a Pauli-X gate is performed on the logical X group of the logical target qubit.

It will appear from the above that operations d1) and d2) can be performed simultaneously, and that the measurements of operations d2) can themselves all be performed simultaneously.

In the above, the Pauli-Z gate and the Pauli-X gate of operations d1) and d2) need not be performed physically. Due to their nature, they may be stored and performed as a "software" operation down the road. Indeed, the LDPC decoder allows to store all Pauli-X and Pauli-Z operations on a given data cat qubit, and to apply them as a pure logical operation bundle at a later point in time. A physical operation corresponding to this bundle may nevertheless be necessary prior to performing some operations of some gates, such as a Toffoli gate between two logical qubits encoded as described here.

F2.3. Operations c and d - Alternative B

According to alternative B, the routing path contains all of the data cat qubits of the logical X group but one, and the routing path ends at a data cat qubit of the routing circuit 5 which is a neighbor of the routing target qubit which is connected to the main target qubit.

This means that the MXXX operations will be performed on all internal routing target qubits as described with respect to operations c1 to c4 of point F4 immediately above, every time with both ancilla qubits.

Moreover, for the routing target qubit, figure 12 shows the operations used to perform the MXX operation:

- c1) the routing target qubit is prepared with a $|+\rangle$ state, and the ancilla qubit connecting the routing target qubit and the end path qubit is prepared with a $|0\rangle$ state,
- c2) a first CNOT gate is performed between the ancilla qubit of operation c1) and the routing target qubit, with the former being the target and the latter being the control,
- c3) a second CNOT gate is made between the ancilla qubit of operation c1) and the end path qubit, with the former being the control and the latter being the target, and in a preferred manner, a third CNOT gate is made simultaneously between the main target qubit and the routing target qubit, with the former being the target and the latter being the control. Incidentally, the second CNOT and third CNOT can be done asynchronously.

- c4) the routing target qubit and the ancilla qubit undergo an MX operation and the results are multiplied to determine the MXX value.

As conventional with MX operations, these steps may be repeated several times, until a result is chosen by majority voting.

After the MXXX operations and the MXX operation have been performed, their results are multiplied to provide a MXX result.

In this alternative, operation d) is unchanged.

F2.4. Operations c and d - Alternative C

Alternative C is treated similarly to alternative B.

According to this alternative, the logical X group contains a single data cat qubit, and it is not contained in the routing path. Hence, the routing path ends at an end path qubit which is a data cat qubit of the routing circuit 5 which is a neighbor of the routing target qubit which is connected to the main target qubit.

Consequently, the operations are similar to those of Alternative B), but without the MXXX operations. Only the MXX operation is performed:

- c1) the routing target qubit is prepared with a $|+\rangle$ state, and the ancilla qubit connecting the routing target qubit and the end path qubit is prepared with a $|0\rangle$ state,
- c2) a first CNOT gate is performed between the ancilla qubit of operation c1) and the routing target qubit, with the former being the target and the latter being the control,
- c3) a second CNOT gate is made between the ancilla qubit of operation c1) and the end path qubit, with the former being the control and the latter being the target, and in a preferred manner, a third CNOT gate is made simultaneously between the main target qubit and the routing target qubit, with the former being the target and the latter being the control. Incidentally, the second CNOT and third CNOT can be done asynchronously.
- c4) the routing target qubit and the ancilla qubit undergo an MX operation and the results are multiplied to determine the MXX value.

As conventional with MX operations, these steps may be repeated several times, until a result is chosen by majority voting.

In this alternative, operation d) is unchanged.

In the above, the CNOT measurements have been presented by first setting a "$|0\rangle_L$" state or a "$|0\rangle$" state to the qubits used to perform the MXX measurement. The same operations could be performed by setting a "$|1\rangle_L$" state or a "$|1\rangle$" state.

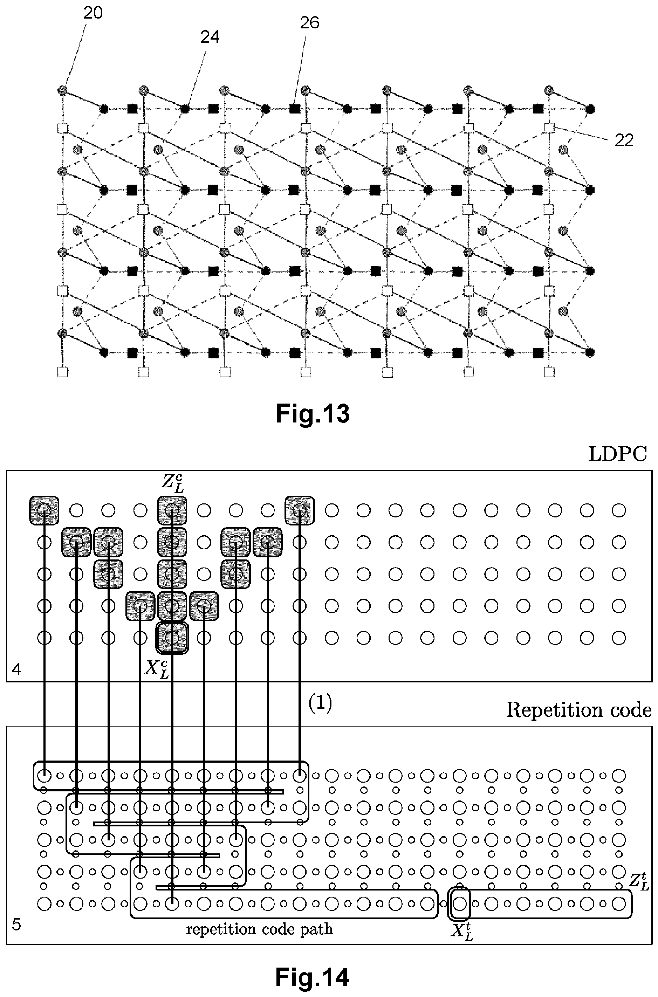

Figure 13 shows an exemplary circuit design for the quantum system of figures 10 to 12.

The layout of the chip is based on a flip chip architecture. The cables between qubits can be on a first or a second plane of the chip (respectively shown in plain or dotted lines). Most crucially, that there is no two plain cables crossing or two dotted cable crossing.

Data qubits 20 of the classical LDPC codes are shown as dots and ancilla qubits 22 for measuring the error syndrome are shown as squares. Data qubits 24 of the routing circuit 5 are also shown as dots and ancilla qubits 26 of the routing circuit 5 are also shown as squares.

F3. Logical quantum gates between a logical qubit in the LDPC circuit as the control and a logical qubit in the routing circuit as the target

The quantum system of figures 10 to 12 may also be used to perform other logical quantum gates. In order to do so, it will be necessary to perform a CNOT gate between a logical group and the routing circuit 5, with the former being the control and the latter being the target. Figure 14 provides an example of how to perform this CNOT gate.

As appears on figure 14 performing a CNOT between a logical qubit having a logical group $Z_L^c$ and a logical X group $X_L^c$ as a control and a repetition code in the routing circuit 5 as a target (hereinafter "the target repetition code") resembles a lot operations of the CNOT gates of figures 11 and 12.

The main difference is that the target logical qubit is replaced by a repetition code, and that consequently there is no need to deal with the logical X group of the target logical qubit.

As a result, all that is needed is to extend the target repetition code to include the data cat qubits of the routing circuit 5 which are connected to the data cat qubit of the logical group $Z_L^c$, and then to perform the CNOTs between the qubits of the logical group $Z_L^c$ and their equivalents in the routing circuit 5.

In other words, this is done by defining a repetition code path which will include all of the qubits of the routing circuit 5 which are connected to the data cat qubit of the logical group $Z_L^c$, similarly to the routing path of figures 11 and 12, and prolonging this repetition code path until an end path qubit which is a data cat qubit which neighbors a data cat qubit of the target repetition code.

Once, the repetition code path is defined, its data cat qubits need to be prepared with a "|0)" state or a "|1⟩" state, and its ancilla qubits need to be prepared with a "| +⟩" state or "| -⟩" state, and the stabilizers of a repetition code in the repetition code path need to be repeatedly measured until a repetition code is achieved in said repetition code path.

Once this is done, a CNOT gate is performed with each of the data cat qubits of the logical group of said control logical qubit being the control, each time with the corresponding data cat qubit in said routing circuit 5 being the target.

There are thus two repetition codes:

- The repetition code path which has been the object of the CNOT gates with each of the data cat qubits of the logical group of said control logical qubit
- The target repetition code.

The repetition code path and the target repetition code are bridged by an ancilla qubit of the routing circuit 5 which connects the end path qubit and its neighbor data cat qubit of the target repetition code.

Finally, all that remains is to perform an MX operation on the bridging ancilla qubit between the end path qubit and the neighbor data cat qubit of the target repetition code:

c1) to prepare the bridging ancilla qubit with a |+⟩ or a |-⟩ state,
c2) to perform a first CNOT gate between the prepared bridging ancilla qubit and the neighboring data cat qubit of the repetition code, with the former being the control and the latter being the target,
c3) to perform a second CNOT gate between the prepared bridging ancilla qubit and the end path qubit, with the former being the control and the latter being the target,
c4) to perform an MX operation on the performed bridging ancilla qubit, to provide an MXX result.

As conventional with MX operations, these steps may be repeated several times, until a result is chosen by majority voting.

As described with the other quantum gates, operation d) may be performed:

d1) depending on the MXX result, to derive a quantum Z gate to be performed on the data cat qubits of the logical group of the control logical qubit,
d2) to apply a measurement of operator Z on all data cat qubits in said repetition code path, and, based on the result of the product of the results, to derive a quantum X gate to be performed on an odd number of data cat qubits of the target repetition code.

F4. Logical quantum gates between a logical qubit in the routing circuit as the control and a logical qubit in the LDPC circuit as the target

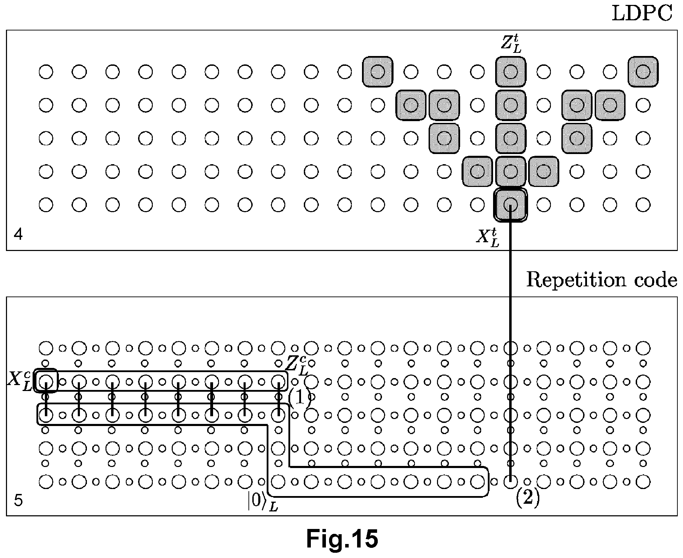

Figure 15 shows another type of CNOT which can be performed is the reverse of the example shown on Figure 14, that is the repetition code in the routing circuit 5 is the control (hereinafter named control repetition code), and the logical qubit encoded in a classical LDPC code in the LDPC circuit 4 is the target (hereinafter the target LDPC code logical qubit).

This type of quantum gate may be beneficial in implementing a number of logical operations - for instance it is a crucial step in a particular implementation of a logical Toffoli gate between three LDPC logical qubits.

As will be appreciated, the control repetition logical qubit can be a so-called "magic state" encoded in a repetition code, magic states for instance include: Toffoli, CZ, S, or T. The skilled person is aware of how magic states may be prepared in a repetition code (hereinafter magic state logical qubit). For instance, they may be prepare in a so-called "magic state factory". The repetition code in which the magic state logical qubit is encoded may be part of the routing circuit (i.e. may be implemented in data cat qubits and ancilla qubits of the routing circuit).

Alternatively, the repetition code in which the magic state logical qubit is encoded may be adjacent to the routing circuit (i.e. be implemented in data cat qubits and ancilla qubits of a magic state circuit wherein the data cat qubits thereof are not respectively connected to a data cat qubit of the LDPC circuit). In this case, the magic state circuit must be connected to the routing circuit via at least one ancilla qubit between a data cat qubit of the magic state circuit and a data cat qubit of the routing circuit. The repetition code in which the magic state logical qubit is encoded may then be moved via any number of ways known in the art to the routing circuit, such that the magic state logical qubit is the control repetition code described herein (*e.g.*, repetition code in which the magic state logical qubit is encoded may be extended, through the least one ancilla qubit between a data cat qubit of the magic state circuit and a data cat qubit of the routing circuit, then subsequently contracted, such that the magic state logical qubit has effectively been moved to the routing circuit to thereby be encoded using data cat qubits of the routing circuit which are respectively connected to data cat qubits of the LDPC circuit).

In the example herein described, the logical CNOT gate is achieved by means of another (*i.e.* routing) logical qubit which is encoded in another (*i.e.* routing) repetition code. This routing repetition code is implemented in the same routing or auxiliary layer (hereinafter routing circuit) in which the repetition code encoding the control repetition code is implemented. In essence, this routing logical qubit is to be entangled with the control repetition code, so as to in turn be entangled with the data cat qubit(s) corresponding to (namely being connected to) the LDPC data cat qubit(s) which provide the support for the X logical operator of the LDPC logical qubit.

Thus, a first operation comprises the steps of:

(i) defining a continuous routing path in the routing circuit such that the path at least includes a plurality of data cat qubits which are each adjacent to a respective data cat qubit of the control repetition code,

(ii) prepare all of the data cat qubits within the routing path with a "$|0\rangle_L$" state or "$|1\rangle_L$" state of a routing repetition code, as done in operations a of section F2.1. and in operation b2) of Figure 14,

(iii) perform a CNOT gate with each of the data cat qubits of the logical Z group of said control repetition code being the control, each time with the corresponding adjacent data cat qubit of the routing path being the target.

The routing path may be defined (or extended) in a similar away as described previously to reach the data cat qubit(s) of the routing circuit 5 which correspond to the LDPC data cat qubits of the LDPC circuit 4 which provide the support for the logical X operator of the LDPC target logical qubit (*i.e.* the routing circuit data cat qubits corresponding to the logical X group of the LDPC target logical qubit).

Due to the LDPC target logical qubit being encoded in a classical LDPC code having a logical X group, three alternatives have to be considered, similarly to sections F2.2. to F2.4. above Thus the scenarios are the various iterations of operations (c) and (d) in the already-filed claims:

F4.1 <u>Alternative A - the routing path has been defined to include all the data cat qubits of the routing circuit which correspond to the logical X group of the LDPC target logical qubit</u>

<u>This alternative is similar to Alternative A of section F2.1.</u>

The routing path includes all of the data cat qubits of the routing circuit 5 which are connected to the data cat qubits of the logical X group of the target logical qubit which form internal routing target qubits.

Operations c) and d) must therefore be performed as follows:

c1) prepare an internal routing target qubit with a $|+\rangle$ state (or a $|-\rangle$ state), and prepare the two ancilla qubits of the routing path surrounding this internal routing target qubit with a $|0\rangle$ state (or a $|1\rangle$ state),

c2) perform a first CNOT gate between the pair of prepared ancilla qubits and the internal routing target qubit, with the former being the target and latter being the control,

c3) perform a second CNOT gate between the pair of prepared ancilla qubits and two neighboring data cat qubits in the routing path, with the former being the control and the latter being the target, and a third CNOT gate between the data cat qubit of LDPC circuit 4 connected to the internal routing target qubit and the corresponding internal routing target qubit, with the former being the target and the latter being the control,

c4) perform an MX operation on the internal routing target qubit and the pair of ancilla qubits of the routing path surrounding it, and to multiply their result,

perform operations c1) to c4) on one of the internal routing target qubit using a single ancilla qubit, to perform operations c1) to c4) on the internal routing target qubits, and to multiply the results of operation c4) on all internal routing target qubits to provide a MXX result,

d1) depending on the MXX result, derive a quantum Z gate to be performed on the data cat qubits of the logical group of the control repetition code, and

d2) apply a measurement of operator Z on all data cat qubits in said routing path except the internal routing target qubits, and, based on the result of the product of the results, derive a quantum X gate to be performed on the data cat qubits of the logical X group of the target LDPC logical qubit.

In the above (this applies to section F2.1. similarly), when operations c1) to c4) are performed using a single ancilla qubit, then and can be defined as follows:

c1) prepare the internal routing target qubit with a |+⟩ or |-⟩ state, and prepare one of the ancilla qubit of the routing path surrounding this internal routing target qubit (*i.e.* one of the neighboring ancilla qubits) with a |0⟩ or a |1⟩ state,

c2) perform a first CNOT gate between the single prepared ancilla qubit and the internal routing target qubit, with the former being the target and latter being the control,

c3) perform a second CNOT gate between the single prepared ancilla qubit and its neighboring data cat qubit in the routing path which is not the internal routing target qubit, with the former being the control and the latter being the target, and a third CNOT gate between the data cat qubit of LDPC quantum superconducting circuit connected to the internal routing target qubit and the corresponding internal routing target qubit, with the former being the target and the latter being the control,

c4) perform an MX operation on the internal routing target qubit and the single prepared ancilla qubit of the routing path neighboring it, and to multiply their result to provide an MXX result,

As with section F2.1. above, if there is a single internal routing qubit and that it is in the routing path, only these operations c1) to c4) will be executed.

Operation d) shares similar features to the sections above.

F4.2 <u>Alternative B - the routing path has been defined to end next to the data cat qubit of the routing circuit which corresponds to the logical X group of the LDPC target logical qubit</u>

This alternative is similar to Alternative B of section F2.2.

This case corresponds to what is shown on Figure 15, and constitutes the preferred embodiment of this type of quantum gate as it involves the less operations.

The only single data cat qubit of the logical X group of the target logical qubit forms a main target qubit. The corresponding (*i.e.* connected) single data cat qubit of the routing circuit 5 forms a routing target qubit. The routing path does not include the routing target qubit, but rather is defined to end at an end path qubit which is a data cat qubit of the routing circuit 5 neighboring the routing target qubit.

Operations c) and d) must therefore be performed as follows:

c1) prepare the routing target qubit with a |+⟩ state (or a |-⟩ state), and to prepare the ancilla qubit connecting said routing target qubit and said end path qubit with a |0⟩ state (or a |1) state),

c2) perform a first CNOT gate between the prepared ancilla qubit and the routing target qubit, with the former being the target and the latter being the control,

c3) perform a second CNOT gate between the prepared ancilla qubit and the end path qubit, with the former being the control and the latter being the target, and a third CNOT gate between said main target qubit and said routing target qubit, with the former being the target and the latter being the control,

c4) to perform an MX operation on the neighboring routing target qubit and the prepared ancilla qubit, and to multiply their result to provide an MXX result,

d1) depending on the MXX result, derive a quantum Z gate to be performed on the data cat qubits of the logical group of the control repetition code, and

d2) apply a measurement of operator Z on all data cat qubits in said routing path except the internal routing target qubits, and, based on the result of the product of the results, derive a quantum X gate to be performed on the data cat qubits of the logical X group of the target LDPC logical qubit.

Operation d) shares similar features to the sections above.

F4.3 <u>Alternative C - the routing path has been defined to include all but one of the data cat qubits of the routing circuit which corresponds to the logical X group of the LDPC target logical qubit, with the path being defined to end next to the remaining data cat qubit of the routing circuit which corresponds to one of the logical X group</u>

The routing path includes all of the data cat qubits of the routing circuit 5 which are connected to the data cat qubits of the logical X group of the target logical qubit but one, these data cat qubits forming internal routing target qubits and the remaining data cat qubit connected to the data cat qubits of the logical X group of the target logical qubit forming a routing target qubit. The routing path is also defined to end at an end path qubit which is a data cat qubit of the routing circuit 5 neighboring said routing target qubit.

Operations c) and d) must therefore be performed as follows:

c1) to prepare an internal routing target qubit with a |+⟩ state, and to prepare the two ancilla qubits of the routing path surrounding this internal routing target qubits with a |0⟩ state,

c2) to perform a first CNOT gate between the pair of prepared ancilla qubits and the internal routing target qubit, with the former being the target and latter being the control,

c3) to perform a second CNOT gate between the pair of prepared ancilla qubits and two neighboring data cat qubits in the routing path, with the former being the control and the latter being the target, and a third CNOT gate between the data cat qubit of LDPC circuit 4 connected to the internal routing target qubit and the corresponding internal routing target qubit, with the former being the target and the latter being the control,

c4) to perform an MX operation on the internal routing target qubit and the pair of ancilla qubits of the routing path surrounding it, and to multiply their result,

said command circuit (6) being arranged to perform operations c1) to c4) on all of the internal routing target qubits, and being further arranged

c5) to prepare the routing target qubit with a $|+\rangle$ state, and to prepare the ancilla qubit connecting the routing target qubit and the end path qubit with a $|0\rangle$ state,

c6) to perform a first CNOT gate between the prepared ancilla qubit and the routing target qubit, with the former being the target and the latter being the control,

c7) to perform a second CNOT gate between the prepared ancilla qubit and the end path qubit, with the former being the control and the latter being the target, and a third CNOT gate between the data cat qubit of LDPC superconducting quantum circuit (4) connected to the routing target qubit and the routing target qubit, with the former being the target and the latter being the control,

c8) to perform an MX operation on the routing target qubit and the prepared ancilla qubit, and to multiply their result, with the results of operation c4) being multiplied together and with the result of operation c8) to provide a MXX result,

d1) depending on the MXX result, to derive a quantum Z gate to be performed on the data cat qubits of the logical group of the control logical qubit,

d2) to apply a measurement of operator Z on all data cat qubits in said routing path except the internal routing target qubits, and, based on the result of the product of the results, to derive a quantum X gate to be performed on the data cat qubits of the logical X group.

Operation d) shares similar features to the sections above.

Also disclosed but unclaimed is a method for performing a logical CNOT gate between a control logical qubit and a target logical qubit encoded in a quantum system for performing a classical LDPC error correcting code according to the invention, said quantum system further comprising a routing superconducting quantum circuit comprising a number n of data resonators, each data resonator having a respective resonance frequency and being coupled to said command circuit for stabilizing a respective data cat qubit, each of said n data resonators of said routing superconducting quantum circuit being connected to a respective one of said n data resonators of said LDPC superconducting quantum circuit, a plurality of ancilla resonators, each ancilla resonator having an ancilla resonance frequency coupled to said command circuit for stabilizing an ancilla qubit,

substantially all data cat qubits being connected to at least two ancilla qubits, and substantially all ancilla qubits being connected to at least two data cat qubits, such that a continuous path can be defined in said routing superconducting quantum circuit which connects any two data cat qubits and is comprised of pairs of data cat qubits which are connected via an ancilla qubit, said method comprising the operations of:

a) Defining a routing path in said routing superconducting quantum circuit which connects all data cat qubits corresponding to the logical group of said control logical qubit with an ancilla qubit being included between each pair of data cat qubits, as well as at least one of the data cat qubits of a logical X group of the target logical qubit, said logical X group of qubits being a set of qubits of said LDPC superconducting quantum circuit which are associated with said target logical qubit and share an odd number of qubits with the logical group of the target logical qubit, and an even number of qubits with all other logical groups in the LDPC superconducting quantum circuit, and preparing all of the data cat qubits within said routing path with a $|0\rangle_L$ state or $|1\rangle_L$ state of a repetition code,

b) performing a CNOT gate with each of the data cat qubits of the logical group of said control logical qubit being the control, each time with the corresponding data cat qubit of said routing superconducting quantum circuit being the target,

c) selectively performing MXX operations and/or MXXX operations between chosen data cat qubits of the routing path and chosen data cat qubits of the routing superconducting quantum circuit which correspond to logical X group of the logical target qubit, and thereafter multiplying the results of these MXX operations and/or MXXX operations to obtain a MXX result, and

d) conditionally on the value of the MXX result, deriving a quantum Z gate to be performed on the data cat qubits of the logical group of the control logical qubit, and conditionally to the results of a measurement of operator Z on data cat qubits in said routing path, deriving a quantum X gate to be performed on the data cat qubits of the logical X group.

Also disclosed but unclaimed is a method for performing a logical CNOT gate according to the method above, in which in operation a), the routing path includes all of the data cat qubits of the routing circuit which are connected to the data cat qubits of the logical X group of the target logical qubit, which form internal routing target qubits, operation c) comprises

c1) preparing an internal routing target qubits with a $|+\rangle$ state, and to prepare the two ancilla qubits of the routing path surrounding this internal routing target qubits with a $|0\rangle$ state,
c2) performing a first CNOT gate between the pair of prepared ancilla qubits and the internal routing target qubit, with the former being the target and latter being the control,
c3) performing a second CNOT gate between the pair of prepared ancilla qubits and two neighboring data cat qubits in the routing path, with the former being the control and the latter being the target, and a third CNOT gate between the data cat qubit of LDPC superconducting quantum circuit connected to the internal routing target qubit and this internal routing target qubit, with the former being the target and the latter being the control,
c4) performing an MX operation on the internal routing target qubit and the pair of ancilla qubits of the routing path surrounding it, and to multiply their result,
operations c1) to c4) being performed on all but one of the internal routing target qubits, and the remaining internal routing target qubit undergoing operations c1) to c4) using a single ancilla qubit, with the results of all operations c4) being multiplied together to provide a MXX result.

Also disclosed but unclaimed is a method for performing a logical CNOT gate according to the method above, in which in operation a), the routing path includes all of the data cat qubits of the routing circuit which are connected to the data cat qubits of the logical X group of the target logical qubit but one, which form internal routing target qubits, and the remaining data cat qubit connected to the data cat qubits of the logical X group of the target logical qubit forming a routing target qubit,
in which operation c) comprises performing the following operations on all of the internal routing target qubits:

c1) to prepare an internal routing target qubits with a $|+\rangle$ state, and to prepare the two ancilla qubits of the routing path surrounding this internal routing target qubits with a $|0\rangle$ state,
c2) to perform a first CNOT gate between the pair of prepared ancilla qubits and the internal routing target qubit, with the former being the target and latter being the control,
c3) to perform a second CNOT gate between the pair of prepared ancilla qubits and two neighboring data cat qubits in the routing path, with the former being the control and the latter being the target, and a third CNOT gate between the data cat qubit of LDPC superconducting quantum circuit connected to the internal routing target qubit and this internal routing target qubit, with the former being the target and the latter being the control,
c4) to perform an MX operation on the internal routing target qubit and the pair of ancilla qubits of the routing path surrounding it,
in which operation c) comprises performing the following operations on the routing target qubit: c5) to prepare an routing target qubits with a $|+\rangle$ state, and to prepare the ancilla qubit connecting the routing target qubit and the end path qubit with a $|0\rangle$ state,
c6) to perform a first CNOT gate between the prepared ancilla qubit and the routing target qubit, with the former being the target and the latter being the control,
c7) to perform a second CNOT gate between the prepared ancilla qubit and the end path qubit, with the former being the control and the latter being the target, and a third CNOT gate between the data cat qubit of LDPC superconducting quantum circuit connected to the routing target qubit and the routing target qubit, with the former being the target and the latter being the control,
c8) to perform an MX operation on the routing target qubit and the prepared ancilla qubit, and to multiply their result,
and in which operation c) further comprises multiplying the results of operations c4) with the result of operation c8) to provide the MXX result.

Also disclosed but unclaimed is a method for performing a logical CNOT gate according to the methods above, in which operation d) comprises d1) depending on the MXX result, deriving a quantum Z gate to be performed on the data cat qubits of the logical group of the control logical qubit, and d2) applying a measurement of operator Z on all data cat qubits in said routing path except the internal routing target qubits, and, based on the result of the product of the results, deriving a quantum X gate to be performed on the data cat qubits of the logical X group.

**Claims**

1. Quantum system for performing a classical LDPC error correcting code comprising :

* a command circuit (6) for selectively applying radiation,
* an LDPC superconducting quantum circuit comprising

- a number n of data resonators (8), each data resonator (8) being coupled to said command circuit (6) for stabilizing a respective data cat qubit,
- said n data resonators (8) being arranged on said LDPC superconducting quantum circuit within a boundary having a substantially trapezoidal shape, such that each of said n data resonators (8) substantially corresponds to the intersection of a row and a column of a grid-like geometry formed inside said boundary, said grid-like geometry having a number of rows equal to or greater than three, and such that the bottom row and the top row of said grid-like geometry form the bases of said substantially trapezoidal shape, said bottom row comprising a number 1 of data resonators being equal to or more than six,
- said n data cat qubits being associated into stabilizer motifs, each of said stabilizer motif spanning over at least two consecutive rows comprised of an upper row comprising a single data cat qubit and of one or more lower rows comprising together at least two data cat qubits (8) which are not distant by more than seven columns and which are each not distant by more than seven columns from the column of said single data cat qubit of said upper row, at least two of said stabilizer motifs being distinct, and all stabilizer motifs comprising a data cat qubit from the bottom row spanning over a chosen number of rows comprised between two and four, such that the data cat qubits of the rows starting from the bottom row until said chosen number of rows minus one constitute logical base data cat qubits, each logical base data cat qubit being associated to a respective logical base group of data cat qubits, each of said logical base group being obtained by virtually setting its associated logical base data cat qubit with a state opposite to that of all the other logical base data cat qubits, applying a cellular automaton rule on all data cat qubits of the others rows of the grid-like geometry to determine respective virtual states, said cellular automaton rule being determined for each data cat qubit based on the stabilizer motif for which this data cat qubit is said single data cat qubit of the upper row of the stabilizer motif, and defining said logical base group based on the data cat qubits which have the same virtual state,
- said logical base groups being combinable to define a set of k logical groups, each logical group being a combination of logical base groups, such that k is less or equal to the number of logical base groups and that no logical group can be obtained by combining other logical groups, such that the resulting classical LDPC code has a value kd/n greater than 1, where d is the distance of said resulting classical LDPC code, said command circuit (6) being arranged to encode a respective logical qubit in each of said k logical groups,

- said LDPC superconducting quantum circuit (4) being further arranged to determine an error syndrome by performing a parity check on the data cat qubits of each stabilizer motif.

2. Quantum system according to claim 1, in which said LDPC superconducting quantum circuit further comprises a plurality of ancilla resonators (10), each ancilla resonator (10) being coupled to said command circuit (6) for stabilizing a respective ancilla qubit, and each ancilla qubit being associated with a respective stabilizer motif, said command circuit (6) being further arranged to repeatedly determine said error syndrome in each stabilizer motif by preparing its associated ancilla qubit (10) in a | -⟩ or | +⟩ state, performing quantum gates with the data cat qubits of the stabilizer motif, and measuring the associated ancilla to determine the presence of a phase flip.

3. Quantum system according to claim 1 or 2, in which each stabilizer motif is selected from the group comprising: inverted T-shape; inverted V-shape; L-shape; backwards-L-shape; leading-diagonal; trailing-diagonal; straight-line.

4. Quantum system according to one of the preceding claims, in which the stabilizer motifs comprise less than seven data cat qubits, and/or associate data cat qubits spanning over at most four consecutive rows.

5. Quantum system according to one of the preceding claims, in which substantially all data cat qubits of a given row have the same stabilizer motif.

6. Quantum system according to one of the preceding claims, in which the logical groups are each identical to a respective one of the logical base groups.

7. Quantum system according to one of the preceding claims, for performing a quantum gate, further comprising a routing superconducting quantum circuit (5) comprising

a number n of data resonators (8), each data resonator (8) having a respective resonance frequency and being coupled to said command circuit (6) for stabilizing a respective data cat qubit, each of said n data resonators (8) of said routing superconducting quantum circuit being connected to a respective one of said n data resonators (8) of said LDPC superconducting quantum circuit,

a plurality of ancilla resonators (10), each ancilla resonator having an ancilla resonance frequency coupled to said command circuit (6) for stabilizing an ancilla qubit,

substantially all data cat qubits being connected to at least two ancilla qubits, and substantially all ancilla qubits being connected to at least two data cat qubits, such that a continuous path can be defined in said routing superconducting quantum circuit (5) which connects any two data cat qubits and is comprised of pairs of data cat qubits which are connected via an ancilla qubit,

said command circuit (6) being arranged, based on a control logical qubit and a target logical data qubit encoded in said LDPC superconducting quantum circuit (4):

a) to define a routing path within said routing superconducting quantum circuit (5) which connects all data cat qubits corresponding to the logical group of said control logical qubit with an ancilla qubit being included between each pair of data cat qubits, wherein the target logical qubit is associated with a logical X group of data cat qubits of said LDPC superconducting quantum circuit (4) which qubits share an odd number of qubits with the logical group of the target logical qubit and an even number of qubits with all other logical groups in the LDPC superconducting quantum circuit (4), such that the routing path includes all of the data cat qubits of the routing circuit (5) which are connected to the data cat qubits of the logical X group of the target logical qubit which form internal routing target qubits, there being at least one internal routing target qubit,

and to selectively use the ancilla qubits of said routing superconducting quantum circuit (5) to prepare all of the data cat qubits within said routing path with a $|0\rangle_L$ state or a $|1\rangle_L$ state of a repetition code,

b) to perform a CNOT gate with each of the data cat qubits of the logical group of said control logical qubit being the control, each time with the corresponding data cat qubit of said routing superconducting quantum circuit (5) being the target,

c1) to prepare an internal routing target qubit with a $|+\rangle$ state, and to prepare the two ancilla qubits of the routing path surrounding this internal routing target qubit with a $|0\rangle$ state,

c2) to perform a first CNOT gate between the pair of prepared ancilla qubits and the internal routing target qubit, with the former being the target and latter being the control,

c3) to perform a second CNOT gate between the pair of prepared ancilla qubits and two neighboring data cat qubits in the routing path, with the former being the control and the latter being the target, and a third CNOT gate between the data cat qubit of LDPC superconducting quantum circuit (4) connected to the internal routing target qubit and this internal routing target qubit, with the former being the target and the latter being the control,

c4) to perform an MX operation on the internal routing target qubit and the pair of ancilla qubits of the routing path surrounding it, and to multiply their result,

said command circuit (6) being further arranged to perform operations c1) to c4) on one of the internal routing target qubit using a single ancilla qubit, to perform operations c1) to c4) on the internal routing target qubits, and to multiply the results of operation c4) on all internal routing target qubits to provide a MXX result,

said command circuit (6) being further arranged

d1) depending on the MXX result, to derive a quantum Z gate to be performed on the data cat qubits of the logical group of the control logical qubit, and

d2) to apply a measurement of operator Z on all data cat qubits in said routing path except the internal routing target qubits, and, based on the result of the product of the results, to derive a quantum X gate to be performed on the data cat qubits of the logical X group.

8. Quantum system according to one of claims 1 to 6, for performing a quantum gate, further comprising a routing superconducting quantum circuit (5) comprising

a number n of data resonators (8), each data resonator (8) having a respective resonance frequency and being coupled to said command circuit (6) for stabilizing a respective data cat qubit, each of said n data resonators (8) of said routing superconducting quantum circuit (5) being connected to a respective one of said n data resonators (8) of said LDPC superconducting quantum circuit (4),

a plurality of ancilla resonators (10), each ancilla resonator having an ancilla resonance frequency coupled to said command circuit (6) for stabilizing an ancilla qubit,

substantially all data cat qubits being connected to at least two ancilla qubits, and substantially all ancilla qubits being connected to at least two data cat qubits, such that a continuous path can be defined in said routing superconducting quantum circuit (5) which connects any two data cat qubits and is comprised of pairs of data cat qubits which are connected via an ancilla qubit,

said command circuit (6) being arranged, based on a control logical qubit and a target logical data qubit encoded in said LDPC superconducting quantum circuit (4):

a) to define a routing path within said routing superconducting quantum circuit (5) which connects all data cat qubits corresponding to the logical group of said control logical qubit with an ancilla qubit being included between each pair of data cat qubits, wherein the target logical qubit comprises a single data cat qubit of said LDPC superconducting quantum circuit (4) which provides the support for the logical X operator of the target logical qubit and forms a main target qubit and its connected data cat qubit of the routing superconducting quantum circuit (5) forms a routing target qubit, the routing path ending at an end path qubit which is a data cat qubit of the routing superconducting quantum circuit (5) neighboring said routing target qubit, and to selectively use the ancilla qubits of said routing superconducting quantum circuit to prepare all of the data cat qubits within said routing path with a $|0\rangle_L$ state or a $|1\rangle_L$ state of a repetition code,

b) to perform a CNOT gate with each of the data cat qubits of the logical group of said control logical qubit being the control, each time with the corresponding data cat qubit of said routing superconducting quantum circuit (5) being the target,

and said command circuit (6) being further arranged:

c1) to prepare the routing target qubit with a $|+\rangle$ state, and to prepare the ancilla qubit connecting said routing target qubit and said end path qubit with a $|0\rangle$ state,

c2) to perform a first CNOT gate between the prepared ancilla qubit and the routing target qubit, with the former being the target and the latter being the control,

c3) to perform a second CNOT gate between the prepared ancilla qubit and the end path qubit, with the former being the control and the latter being the target, and a third CNOT gate between said main target qubit and said routing target qubit, with the former being the target and the latter being the control,

c4) to perform an MX operation on the neighboring routing target qubit and the prepared ancilla qubit, and to multiply their result to provide an MXX result,

d1) depending on the MXX result, to derive a quantum Z gate to be performed on the data cat qubits of the logical group of the control logical qubit,

d2) to apply a measurement of operator Z on all data cat qubits in said routing path, and, based on the result of the product of the results, to derive a quantum X gate to be performed on the data cat qubits of the logical X group.

9. Quantum system according to one of claims 1 to 6, for performing a quantum gate, further comprising a routing superconducting quantum circuit (5) comprising

a number n of data resonators (8), each data resonator (8) having a respective resonance frequency and being coupled to said command circuit (6) for stabilizing a respective data cat qubit, each of said n data resonators (8) of said routing superconducting quantum circuit (5) being connected to a respective one of said n data resonators (8) of said LDPC superconducting quantum circuit (4),

a plurality of ancilla resonators (10), each ancilla resonator having an ancilla resonance frequency coupled to said command circuit (6) for stabilizing an ancilla qubit,

substantially all data cat qubits being connected to at least two ancilla qubits, and substantially all ancilla qubits being connected to at least two data cat qubits, such that a continuous path can be defined in said routing superconducting quantum circuit (5) which connects any two data cat qubits and is comprised of pairs of data cat qubits which are connected via an ancilla qubit,

said command circuit (6) being arranged, based on a control logical qubit and a target logical data qubit encoded in said LDPC superconducting quantum circuit (4):

a) to define a routing path within said routing superconducting quantum circuit (5) which connects all data cat qubits corresponding to the logical group of said control logical qubit with an ancilla qubit being included between each pair of data cat qubits, wherein the target logical qubit is associated with a logical X group of data cat qubits of said LDPC superconducting quantum circuit (4) which qubits share an odd number of qubits with the logical group of the target logical qubit and an even number of qubits with all other logical groups in the LDPC superconducting quantum circuit, such that the routing path includes all of the data cat qubits of the routing circuit (5) which are connected to the data cat qubits of the logical X group of the target logical qubit but one, these data cat qubits forming internal routing target qubits and the remaining data cat qubit connected to the data cat qubits of the logical X group of the target logical qubit forming a routing target qubit,

the routing path ending at an end path qubit which is a data cat qubit of the routing superconducting quantum circuit (5) neighboring said routing target qubit, and to selectively use the ancilla qubits of said routing superconducting quantum circuit to prepare all of the data cat qubits within said routing path with a $|0\rangle_L$ state or a $|1\rangle_L$ state of a repetition code,

b) to perform a CNOT gate with each of the data cat qubits of the logical group of said control logical qubit being the control, each time with the corresponding data cat qubit of said routing superconducting quantum circuit (5) being the target,

c1) to prepare an internal routing target qubit with a $|+\rangle$ state, and to prepare the two ancilla qubits of the routing path surrounding this internal routing target qubits with a $|0\rangle$ state,

c2) to perform a first CNOT gate between the pair of prepared ancilla qubits and the internal routing target qubit, with the former being the target and latter being the control,

c3) to perform a second CNOT gate between the pair of prepared ancilla qubits and two neighboring data cat qubits in the routing path, with the former being the control and the latter being the target, and a third CNOT gate between the data cat qubit of LDPC superconducting quantum circuit (4) connected to the internal routing target qubit and this internal routing target qubit, with the former being the target and the latter being the control,

c4) to perform an MX operation on the internal routing target qubit and the pair of ancilla qubits of the routing path surrounding it, and to multiply their result,

said command circuit (6) being arranged to perform operations c1) to c4) on all of the internal routing target qubits, and being further arranged

c5) to prepare the routing target qubit with a $|+\rangle$ state, and to prepare the ancilla qubit connecting the routing target qubit and the end path qubit with a $|0\rangle$ state,

c6) to perform a first CNOT gate between the prepared ancilla qubit and the routing target qubit, with the former being the target and the latter being the control,

c7) to perform a second CNOT gate between the prepared ancilla qubit and the end path qubit, with the former being the control and the latter being the target, and a third CNOT gate between the data cat qubit of LDPC superconducting quantum circuit (4) connected to the routing target qubit and the routing target qubit, with the former being the target and the latter being the control,

c8) to perform an MX operation on the routing target qubit and the prepared ancilla qubit, and to multiply their result,

said command circuit (6) being further arranged to multiply the results of operation c4) together and with the result of operation c8) to provide a MXX result,

d1) depending on the MXX result, to derive a quantum Z gate to be performed on the data cat qubits of the logical group of the control logical qubit,

d2) to apply a measurement of operator Z on all data cat qubits in said routing path except the internal routing target qubits, and, based on the result of the product of the results, to derive a quantum X gate to be performed on the data cat qubits of the logical X group.

10. Quantum system according to one of claims 1 to 6, for performing a quantum gate, further comprising a routing superconducting quantum circuit (5) comprising

a number n of data resonators (8), each data resonator (8) having a respective resonance frequency and being coupled to said command circuit (6) for stabilizing a respective data cat qubit, each of said n data resonators (8) of said routing superconducting quantum circuit (5) being connected to a respective one of said n data resonators (8) of said LDPC superconducting quantum circuit (4) a plurality of ancilla resonators (10), each ancilla resonator having an ancilla resonance frequency coupled to said command circuit (6) for stabilizing an ancilla qubit, substantially all data cat qubits being connected to at least two ancilla qubits, and substantially all ancilla qubits being connected to at least two data cat qubits, such that a continuous path can be defined in said routing superconducting quantum circuit (5) which connects any two data cat qubits and is comprised of pairs of data cat qubits which are connected via an ancilla qubit,

said routing superconducting quantum circuit (5) comprising a target repetition code comprising a succession of data cat qubits and ancilla qubits,

said command circuit (6) being arranged, based on a control logical qubit encoded in said LDPC superconducting quantum circuit (4):

a) to define a repetition code path within said routing superconducting quantum circuit which connects all data cat qubits corresponding to the logical group of said control logical qubit with an ancilla qubit being included between each pair of data cat qubits, said repetition code path extending until an end path qubit which is a data cat qubit of the routing superconducting quantum circuit (5) neighboring a data cat qubit of said target repetition code, with a bridging ancilla qubit between said end path qubit and said neighboring data cat qubit of said target repetition code,

b1) to prepare all of the data cat qubits within said repetition code path with a $|0\rangle$ state or a $|1\rangle$ state, and the ancilla qubits with a $|+\rangle$ state or $|-\rangle$ state,

b2) to repeatedly measure the stabilizers in the repetition code path to prepare a routing repetition code in a $|0\rangle_L$ state or a $|1\rangle_L$ state in the repetition code path, and

b3) to perform a CNOT gate with each of the data cat qubits of the logical group of said control logical qubit being the control, each time with the corresponding data cat qubit in said routing superconducting quantum circuit (5) being the target

and said command circuit (6) being further arranged:

c1) to prepare the bridging ancilla qubit with a $|+\rangle$ or a $|-\rangle$ state,

c2) to perform a first CNOT gate between the prepared bridging ancilla qubit and the neighboring data cat qubit of the repetition code, with the former being the control and the latter being the target,

c3) to perform a second CNOT gate between the prepared bridging ancilla qubit and the end path qubit, with the former being the control and the latter being the target,

c4) to perform an MX operation on the performed bridging ancilla qubit to provide an MXX result,

d1) depending on the MXX result, to derive a quantum Z gate to be performed on the data cat qubits of the logical group of the control logical qubit,

d2) to apply a measurement of operator Z on all data cat qubits in said repetition code path, and, based on the result of the product of the results, to derive a quantum X gate to be performed on an odd number of data cat qubits of the target repetition code.

11. Quantum system according to one of claims 7 to 10, in which said command circuit (6) is further arranged to repeat operations c1) to c4) and/or c5) to c8) a plurality of times, and to determine a majority vote to provide the MXX result.

12. Quantum system according to one of claims 7 to 11, in which the quantum Z gate of operation d1) and/or the quantum X gate of operation d2) are stored in order to be applied later.

13. Quantum system according to one of claims 1 to 6, for performing a quantum gate, further comprising a routing superconducting quantum circuit (5) comprising a number n of data resonators (8), each data resonator (8) having a respective resonance frequency and being coupled to said command circuit (6) for stabilizing a respective data cat qubit, each of said n data resonators (8) of said routing superconducting quantum circuit (5) being connected to a respective one of said n data resonators (8) of said LDPC superconducting quantum circuit (4) a plurality of ancilla resonators (10), each ancilla resonator having an ancilla resonance frequency coupled to said command circuit (6) for stabilizing an ancilla qubit,

substantially all data cat qubits being connected to at least two ancilla qubits, and substantially all ancilla qubits being connected to at least two data cat qubits, such that a continuous path can be defined in said routing superconducting quantum circuit (5) which connects any two data cat qubits and is comprised of pairs of data cat qubits which are connected via an ancilla qubit,

said LDPC superconducting quantum circuit (4) comprising a target logical qubit encoded in a classical LDPC code wherein the target logical qubit is associated with a logical X group of data cat qubits of said LDPC superconducting quantum circuit (4) which qubits share an odd number of qubits with the logical group of the target logical qubit and an even number of qubits with all other logical groups in the LDPC superconducting quantum circuit ,

said command circuit (6) being arranged, based on a control repetition code in said routing superconducting quantum circuit (5) comprising a succession of data cat qubits and ancilla qubits:

a) to define a continuous routing path in the routing circuit such that it includes at least a plurality of data cat qubits which are each adjacent to a respective data cat qubit of the control repetition code,

b1) to prepare all of the data cat qubits within said routing path with a $|0\rangle$ state or a $|1\rangle$ state, and the ancilla qubits with a $|+\rangle$ state or $|-\rangle$ state,

b2) to repeatedly measure the stabilizers in the routing path to prepare a routing repetition code in a $|0\rangle_L$ state or a $|1\rangle_L$ state in the routing path, and

b3) to perform a CNOT gate with each of the data cat qubits of the logical group of said control repetition code being the control, each time with the corresponding adjacent data cat qubit of the routing path being the target,

c1) prepare an internal routing target qubit with a $|+\rangle$ state (or a $|-\rangle$ state), and prepare the two ancilla qubits of the routing path surrounding this internal routing target qubit with a $|0\rangle$ state (or a $|1\rangle$ state), c2) perform a first CNOT gate between the pair of prepared ancilla qubits and the internal routing target qubit, with the former being the target and latter being the control,

c3) perform a second CNOT gate between the pair of prepared ancilla qubits and two neighboring data cat qubits in the routing path, with the former being the control and the latter being the target, and a third CNOT gate between the data cat qubit of LDPC circuit 4 connected to the internal routing target qubit and the corresponding internal routing target qubit, with the former being the target and the latter being the control,

c4) perform an MX operation on the internal routing target qubit and the pair of ancilla qubits of the routing path surrounding it, and to multiply their result,

said command circuit (6) being further arranged to perform operations c1) to c4) on one of the internal routing target qubit using a single ancilla qubit, to perform operations c1) to c4) on the internal routing target qubits, and to multiply the results of operation c4) on all internal routing target qubits to provide a MXX result,

d1) depending on the MXX result, derive a quantum Z gate to be performed on the data cat qubits of the logical group of the control repetition code, and

d2) apply a measurement of operator Z on all data cat qubits in said routing path except the internal routing target qubits, and, based on the result of the product of the results, derive a quantum X gate to be performed on the data cat qubits of the logical X group of the target LDPC logical qubit.

14. Quantum system according to one of claims 1 to 6, for performing a quantum gate, further comprising a routing superconducting quantum circuit (5) comprising

    a number n of data resonators (8), each data resonator (8) having a respective resonance frequency and being coupled to said command circuit (6) for stabilizing a respective data cat qubit, each of said n data resonators (8) of said routing superconducting quantum circuit (5) being connected to a respective one of said n data resonators (8) of said LDPC superconducting quantum circuit (4)

    a plurality of ancilla resonators (10), each ancilla resonator having an ancilla resonance frequency coupled to said command circuit (6) for stabilizing an ancilla qubit,

    substantially all data cat qubits being connected to at least two ancilla qubits, and substantially all ancilla qubits being connected to at least two data cat qubits, such that a continuous path can be defined in said routing superconducting quantum circuit (5) which connects any two data cat qubits and is comprised of pairs of data cat qubits which are connected via an ancilla qubit,

    said LDPC superconducting quantum circuit (4) comprising a target logical qubit encoded in a classical LDPC code, wherein the target logical qubit is associated with a logical X group of data cat qubits of said LDPC superconducting quantum circuit (4) which qubits share an odd number of qubits with the logical group of the target logical qubit and an even number of qubits with all other logical groups in the LDPC superconducting quantum circuit,

    said command circuit (6) being arranged, based on a control repetition code in said routing superconducting quantum circuit (5) comprising a succession of data cat qubits and ancilla qubits:

    a) to define a continuous routing path in the routing circuit such that it includes at least a plurality of data cat qubits which are each adjacent to a respective data cat qubit of the control repetition code,

b1) to prepare all of the data cat qubits within said routing path with a $|0\rangle$ state or a $|1\rangle$ state, and the ancilla qubits with a $|+\rangle$ state or $|-\rangle$ state,

b2) to repeatedly measure the stabilizers in the routing path to prepare a routing repetition code in a $|0\rangle_L$ state or a $|1\rangle_L$ state in the routing path, and

b3) to perform a CNOT gate with each of the data cat qubits of the logical group of said control repetition code being the control, each time with the corresponding adjacent data cat qubit of the routing path being the target,

c1) prepare the routing target qubit with a $|+\rangle$ state (or a $|-\rangle$ state), and to prepare the ancilla qubit connecting said routing target qubit and said end path qubit with a |0⟩ state (or a |1) state),

c2) perform a first CNOT gate between the prepared ancilla qubit and the routing target qubit, with the former being the target and the latter being the control,

c3) perform a second CNOT gate between the prepared ancilla qubit and the end path qubit, with the former being the control and the latter being the target, and a third CNOT gate between said main target qubit and said routing target qubit, with the former being the target and the latter being the control,

c4) to perform an MX operation on the neighboring routing target qubit and the prepared ancilla qubit, and to multiply their result to provide an MXX result,

d1) depending on the MXX result, derive a quantum Z gate to be performed on the data cat qubits of the logical group of the control repetition code, and

d2) apply a measurement of operator Z on all data cat qubits in said routing path except the internal routing target qubits, and, based on the result of the product of the results, derive a quantum X gate to be performed on the data cat qubits of the logical X group of the target LDPC logical qubit.

15. Quantum system according to one of claims 1 to 6, for performing a quantum gate, further comprising a routing superconducting quantum circuit (5) comprising

a number n of data resonators (8), each data resonator (8) having a respective resonance frequency and being coupled to said command circuit (6) for stabilizing a respective data cat qubit, each of said n data resonators (8) of said routing superconducting quantum circuit (5) being connected to a respective one of said n data resonators (8) of said LDPC superconducting quantum circuit (4) a plurality of ancilla resonators (10), each ancilla resonator having an ancilla resonance frequency coupled to said command circuit (6) for stabilizing an ancilla qubit, substantially all data cat qubits being connected to at least two ancilla qubits, and substantially all ancilla qubits being connected to at least two data cat qubits, such that a continuous path can be defined in said routing superconducting quantum circuit (5) which connects any two data cat qubits and is comprised of pairs of data cat qubits which are connected via an ancilla qubit,

said LDPC superconducting quantum circuit (4) comprising a target logical qubit encoded in a classical LDPC code, wherein the target logical qubit is associated with a logical X group of data cat qubits of said LDPC superconducting quantum circuit (4) which qubits share an odd number of qubits with the logical group of the target logical qubit and an even number of qubits with all other logical groups in the LDPC superconducting quantum circuit,

said command circuit (6) being arranged, based on a control repetition code in said routing superconducting quantum circuit (5) comprising a succession of data cat qubits and ancilla qubits:

a) to define a continuous routing path in the routing circuit such that it includes at least a plurality of data cat qubits which are each adjacent to a respective data cat qubit of the control repetition code,

b1) to prepare all of the data cat qubits within said routing path with a |0⟩ state or a |1⟩ state, and the ancilla qubits with a | +⟩ state or | -⟩ state,

b2) to repeatedly measure the stabilizers in the routing path to prepare a routing repetition code in a $|0\rangle_L$ state or a $|1\rangle_L$ state in the routing path, and

b3) to perform a CNOT gate with each of the data cat qubits of the logical group of said control repetition code being the control, each time with the corresponding adjacent data cat qubit of the routing path being the target,

c1) to prepare an internal routing target qubit with a |+⟩ state, and to prepare the two ancilla qubits of the routing path surrounding this internal routing target qubits with a 10) state,

c2) to perform a first CNOT gate between the pair of prepared ancilla qubits and the internal routing target qubit, with the former being the target and latter being the control,

c3) to perform a second CNOT gate between the pair of prepared ancilla qubits and two neighboring data cat qubits in the routing path, with the former being the control and the latter being the target, and a third CNOT gate between the data cat qubit of LDPC circuit 4 connected to the internal routing target qubit and the corresponding internal routing target qubit, with the former being the target and the latter being the control,

c4) to perform an MX operation on the internal routing target qubit and the pair of ancilla qubits of the routing path surrounding it, and to multiply their result,

said command circuit (6) being arranged to perform operations c1) to c4) on all of the internal routing target qubits, and being further arranged

c5) to prepare the routing target qubit with a |+⟩ state, and to prepare the ancilla qubit connecting the routing target qubit and the end path qubit with a |0⟩ state,

c6) to perform a first CNOT gate between the prepared ancilla qubit and the routing target qubit, with the former being the target and the latter being the control,

c7) to perform a second CNOT gate between the prepared ancilla qubit and the end path qubit, with the former being the control and the latter being the target, and a third CNOT gate between the data cat qubit of LDPC superconducting quantum circuit (4) connected to the routing target qubit and the routing target qubit, with the former being the target and the latter being the control,

c8) to perform an MX operation on the routing target qubit and the prepared ancilla qubit, and to multiply their result,

said command circuit (6) being further arranged to multiply the results of operation c4) together and with the result of operation c8) to provide a MXX result,

d1) depending on the MXX result, to derive a quantum Z gate to be performed on the data cat qubits of the logical group of the control logical qubit,

d2) to apply a measurement of operator Z on all data cat qubits in said routing path except the internal routing target qubits, and, based on the result of the product of the results, to derive a quantum X gate to be performed on the data cat qubits of the logical X group.

## Patentansprüche

1. Quantensystem zur Durchführung eines klassischen LDPC-Fehlerkorrekturcodes, umfassend:

- eine Befehlsschaltung (6) zur selektiven Anwendung von Strahlung,
- eine supraleitende LDPC-Quantenschaltung, umfassend:

- eine Anzahl n von Datenresonatoren (8), wobei jeder Datenresonator (8) zur Stabilisierung eines jeweiligen Daten-Cat-Qubits mit der Befehlsschaltung (6) gekoppelt ist,
- wobei die n Datenresonatoren (8) auf der supraleitenden LDPC-Quantenschaltung innerhalb einer Begrenzung angeordnet sind, die eine im Wesentlichen trapezförmige Form aufweist, sodass jeder der n Datenresonatoren (8) im Wesentlichen dem Schnittpunkt einer Zeile und einer Spalte einer innerhalb der Begrenzung ausgebildeten gitterartigen Geometrie entspricht, wobei die gitterartige Geometrie eine Anzahl von Zeilen aufweist, die gleich oder größer als drei ist, und sodass die unterste Zeile und die oberste Zeile der gitterartigen Geometrie die Grundlinien der im Wesentlichen trapezförmigen Form ausbilden, wobei die unterste Zeile eine Anzahl 1 von Datenresonatoren umfasst, die gleich oder größer als sechs ist,
- wobei die n Daten-Cat-Qubits zu Stabilisatormotiven verknüpft sind, wobei jedes der Stabilisatormotive sich über mindestens zwei aufeinanderfolgende Zeilen erstreckt, bestehend aus einer oberen Zeile, die ein einzelnes Daten-Cat-Qubit umfasst, und einer oder mehreren unteren Zeilen, die zusammen mindestens zwei Daten-Cat-Qubits (8) umfassen, die nicht mehr als sieben Spalten voneinander entfernt sind und die jeweils nicht mehr als sieben Spalten von der Spalte des einzelnen Daten-Cat-Qubits der oberen Zeile entfernt sind, wobei mindestens zwei der Stabilisatormotive voneinander verschieden sind und alle Stabilisatormotive ein Daten-Cat-Qubit aus der untersten Zeile umfassen, das sich über eine gewählte Anzahl von Zeilen erstreckt, die zwischen zwei und vier liegt, sodass die Daten-Cat-Qubits der Zeilen, die von der untersten Zeile bis zu der gewählten Anzahl von Zeilen minus eins reichen, logische Basis-Daten-Cat-Qubits bilden, wobei jedes logische Basis-Daten-Cat-Qubit einer jeweiligen logischen Basisgruppe von Daten-Cat-Qubits zugeordnet ist, wobei jede der logischen Basisgruppen durch virtuelles Setzen ihres zugeordneten logischen Basis-Daten-Cat-Qubits auf einen Zustand, der dem aller anderen logischen Basis-Daten-Cat-Qubits entgegengesetzt ist, erhalten wird, und eine Zellulärer-Automat-Regel auf alle Daten-Cat-Qubits der übrigen Zeilen der gitterartigen Geometrie angewendet wird, um jeweiligen virtuellen Zustände zu bestimmen, wobei die Zellulärer-Automat-Regel für jedes Daten-Cat-Qubit auf der Grundlage desjenigen Stabilisatormotivs bestimmt wird, für das dieses Daten-Cat-Qubit das einzelne Daten-Cat-Qubit der oberen Zeile des Stabilisatormotivs ist, und wobei die logische Basisgruppe auf der Grundlage derjenigen Daten-Cat-Qubits, die denselben virtuellen Zustand aufweisen, definiert wird,
- wobei die logischen Basisgruppen kombinierbar sind, um eine Menge von k logischen Gruppen zu definieren, wobei jede logische Gruppe eine Kombination aus logischen Basisgruppen ist, und zwar derart, dass k kleiner oder gleich der Anzahl der logischen Basisgruppen ist und dass keine logische Gruppe durch Kombination anderer logischer Gruppen erhalten werden kann, sodass der resultierende klassische LDPC-Code einen Wert kd/n größer als 1 aufweist, wobei d der Abstand des resultierenden klassischen LDPC-Codes ist, sodass die Befehlsschaltung (6) dafür angeordnet ist, ein jeweiliges logisches Qubit in jeder der k logischen Gruppen zu codieren,
- wobei die supraleitende LDPC-Quantenschaltung (4) ferner dafür eingerichtet ist, durch Durchführen einer Paritätsprüfung an den Daten-Cat-Qubits jedes Stabilisatormotivs ein Fehlersyndrom zu bestimmen.

2. Quantensystem nach Anspruch 1, bei dem die supraleitende LDPC-Quantenschaltung ferner eine Vielzahl von Ancilla-Resonatoren (10) umfasst, wobei jeder Ancilla-Resonator (10) mit der Befehlsschaltung (6) gekoppelt ist, um ein jeweiliges Ancilla-Qubit zu stabilisieren, und jedes Ancilla-Qubit einem jeweiligen Stabilisatormotiv zugeordnet ist, wobei die Befehlsschaltung (6) ferner dafür angeordnet ist, das Fehlersyndrom in jedem Stabilisatormotiv wiederholt zu bestimmen, und zwar durch Vorbereiten seines zugehörigen Ancilla-Qubits (10) in einem Zustand $|-\rangle$ oder $|+\rangle$, Durchführen von Quantengattern mit den Daten-Cat-Qubits des Stabilisatormotivs und Messen des zugehörigen Ancilla-Qubits, um das Vorliegen einer Phasenumkehr zu bestimmen.

3. Quantensystem nach Anspruch 1 oder 2, bei dem jedes Stabilisatormotiv aus der Gruppe ausgewählt ist, die Folgendes umfasst: umgekehrte T-Form; umgekehrte V-Form; L-Form; Rückwärts-L-Form; fallende Diagonale; steigende Diagonale; gerade Linie.

4. Quantensystem nach einem der vorstehenden Ansprüche, bei dem die Stabilisatormotive weniger als sieben Daten-Cat-Qubits umfassen und/oder Daten-Cat-Qubits verknüpfen, die sich über höchstens vier aufeinanderfolgende Zeilen erstrecken.

5. Quantensystem nach einem der vorstehenden Ansprüche, bei dem im Wesentlichen alle Daten-Cat-Qubits einer bestimmten Zeile dasselbe Stabilisatormotiv aufweisen.

6. Quantensystem nach einem der vorstehenden Ansprüche, bei dem die logischen Gruppen jeweils mit der jeweiligen logischen Basisgruppe identisch sind.

7. Quantensystem nach einem der vorstehenden Ansprüche zur Durchführung eines Quantengatters, ferner eine supraleitende Routing-Quantenschaltung (5) umfassend, welche eine Anzahl n von Datenresonatoren (8) umfasst, wobei jeder Datenresonator (8) eine jeweilige Resonanzfrequenz aufweist und mit der Befehlsschaltung (6) gekoppelt ist, um ein jeweiliges Daten-Cat-Qubit zu stabilisieren, wobei jeder der n Datenresonatoren (8) der supraleitenden Routing-Quantenschaltung mit einem jeweiligen der n Datenresonatoren (8) der supraleitenden LDPC-Quantenschaltung verbunden ist, und

eine Vielzahl von Ancilla-Resonatoren (10), wobei jeder Ancilla-Resonator eine Ancilla-Resonanzfrequenz aufweist und zwecks Stabilisierung eines Ancilla-Qubits mit der Befehlsschaltung (6) gekoppelt ist,
wobei im Wesentlichen alle Daten-Cat-Qubits mit mindestens zwei Ancilla-Qubits verbunden sind und im Wesentlichen alle Ancilla-Qubits mit mindestens zwei Daten-Cat-Qubits verbunden sind, sodass in der supraleitenden Routing-Quantenschaltung (5) ein durchgehender Pfad definiert werden kann, der jegliche zwei Daten-Cat-Qubits verbindet und aus Paaren von Daten-Cat-Qubits besteht, die über ein Ancilla-Qubit verbunden sind, wobei die Befehlsschaltung (6) dafür eingerichtet ist, auf der Grundlage eines logischen Steuer-Qubits und eines in die supraleitende LDPC-Quantenschaltung (4) codierten logischen Ziel-Daten-Qubits:

a) einen Routingpfad innerhalb der supraleitenden Routing-Quantenschaltung (5) zu definieren, der alle Daten-Cat-Qubits, die der logischen Gruppe des logischen Steuer-Qubits entsprechen, mit einem Ancilla-Qubit verbindet, das zwischen jedem Paar von Daten-Cat-Qubits eingeschlossen ist, wobei das logische Ziel-Qubit einer logischen X-Gruppe von Daten-Cat-Qubits der supraleitenden LDPC-Quantenschaltung (4) zugeordnet ist, wobei diese Qubits eine ungerade Anzahl von Qubits mit der logischen Gruppe des logischen Ziel-Qubits und eine gerade Anzahl von Qubits mit allen anderen logischen Gruppen in der supraleitenden LDPC-Quantenschaltung (4) gemeinsam haben, sodass der Routingpfad alle Daten-Cat-Qubits der Routing-Schaltung (5) einschließt, die mit den Daten-Cat-Qubits der logischen X-Gruppe des logischen Ziel-Qubits verbunden sind, die interne Routingziel-Qubits bilden, wobei es mindestens ein internes Routingziel-Qubit gibt,
und die Ancilla-Qubits der supraleitenden Routing-Quantenschaltung (5) selektiv zu verwenden, um alle Daten-Cat-Qubits innerhalb des Routingpfades mit einem $|0\rangle_L$-Zustand oder einem $|1\rangle_L$-Zustand eines Wiederholungscodes vorzubereiten,
b) ein CNOT-Gatter durchzuführen, wobei jedes der Daten-Cat-Qubits der logischen Gruppe des logischen Steuer-Qubits die Steuerung ist, wobei jedes Mal das entsprechende Daten-Cat-Qubit der supraleitenden Routing-Quantenschaltung (5) das Ziel ist,

c1) ein internes Routingziel-Qubit mit einem $|+\rangle$-Zustand vorzubereiten und die beiden Ancilla-Qubits des Routingpfades, die dieses interne Routingziel-Qubit umgeben, mit einem $|0\rangle$-Zustand vorzubereiten,

c2) ein erstes CNOT-Gatter zwischen dem Paar von vorbereiteten Ancilla-Qubits und dem internen Routingziel-Qubit durchzuführen, wobei Erstere das Ziel sind und Letzteres die Steuerung ist,

c3) ein zweites CNOT-Gatter zwischen dem Paar von vorbereiteten Ancilla-Qubits und zwei benachbarten Daten-Cat-Qubits im Routingpfad durchzuführen, wobei Erstere die Steuerung sind und Letztere das Ziel sind, und ein drittes CNOT-Gatter zwischen dem Daten-Cat-Qubit der supraleitenden LDPC-Quantenschaltung (4), das mit dem internen Routingziel-Qubit verbunden ist, und diesem internen Routingziel-Qubit durchzuführen, wobei Ersteres das Ziel ist und Letzteres die Steuerung ist,

c4) eine MX-Operation auf dem internen Routingziel-Qubit und dem Paar von Ancilla-Qubits des Routingpfades, die es umgeben, durchzuführen und deren Ergebnis zu multiplizieren,

wobei die Befehlsschaltung (6) ferner dafür eingerichtet ist, Operationen c1) bis c4) auf einem der internen Routingziel-Qubits unter Verwendung eines einzelnen Ancilla-Qubits durchzuführen, Operationen c1) bis c4) auf den internen Routingziel-Qubits durchzuführen und die Ergebnisse der Operation c4) auf allen internen Routingziel-Qubits zu multiplizieren, um ein MXX-Ergebnis bereitzustellen,

wobei die Befehlsschaltung (6) ferner dafür eingerichtet ist:

d1) abhängig vom MXX-Ergebnis ein Quanten-Z-Gatter abzuleiten, das auf den Daten-Cat-Qubits der logischen Gruppe des logischen Steuer-Qubits durchzuführen ist, und

d2) eine Messung des Operators Z auf alle Daten-Cat-Qubits in dem Routingpfad mit Ausnahme der internen Routingziel-Qubits anzuwenden und auf der Grundlage des Ergebnisses des Produkts der Ergebnisse ein Quanten-X-Gatter abzuleiten, das auf den Daten-Cat-Qubits der logischen X-Gruppe durchzuführen ist.

8. Quantensystem nach einem der Ansprüche 1 bis 6 zur Durchführung eines Quantengatters, ferner eine supraleitende Routing-Quantenschaltung (5) umfassend, welche umfasst

eine Anzahl n von Datenresonatoren (8), wobei jeder Datenresonator (8) eine jeweilige Resonanzfrequenz aufweist und mit der Befehlsschaltung (6) gekoppelt ist, um ein jeweiliges Daten-Cat-Qubit zu stabilisieren, wobei jeder der n Datenresonatoren (8) der supraleitenden Routing-Quantenschaltung (5) mit einem jeweiligen der n Datenresonatoren (8) der supraleitenden LDPC-Quantenschaltung (4) verbunden ist, und

eine Vielzahl von Ancilla-Resonatoren (10), wobei jeder Ancilla-Resonator eine Ancilla-Resonanzfrequenz aufweist und zwecks Stabilisierung eines Ancilla-Qubits mit der Befehlsschaltung (6) gekoppelt ist,

wobei im Wesentlichen alle Daten-Cat-Qubits mit mindestens zwei Ancilla-Qubits verbunden sind und im Wesentlichen alle Ancilla-Qubits mit mindestens zwei Daten-Cat-Qubits verbunden sind, sodass in der supraleitenden Routing-Quantenschaltung (5) ein durchgehender Pfad definiert werden kann, der jegliche zwei Daten-Cat-Qubits verbindet und aus Paaren von Daten-Cat-Qubits besteht, die über ein Ancilla-Qubit verbunden sind,

wobei die Befehlsschaltung (6) dafür eingerichtet ist, auf der Grundlage eines logischen Steuer-Qubits und eines in die supraleitende LDPC-Quantenschaltung (4) codierten logischen Ziel-Daten-Qubits:

a) einen Routingpfad innerhalb der supraleitenden Routing-Quantenschaltung (5) zu definieren, der alle Daten-Cat-Qubits, die der logischen Gruppe des logischen Steuer-Qubits entsprechen, mit einem Ancilla-Qubit verbindet, das zwischen jedem Paar von Daten-Cat-Qubits eingeschlossen ist, wobei das logische Ziel-Qubit ein einzelnes Daten-Cat-Qubit der supraleitenden LDPC-Quantenschaltung (4) umfasst, das die Unterstützung für den logischen X-Operator des logischen Ziel-Qubits bereitstellt und ein Hauptziel-Qubit bildet, und dessen verbundenes Daten-Cat-Qubit der supraleitenden Routing-Quantenschaltung (5) ein Routingziel-Qubit bildet, wobei der Routingpfad an einem Endpfad-Qubit endet, das ein dem Routingziel-Qubit benachbartes Daten-Cat-Qubit der supraleitenden Routing-Quantenschaltung (5) ist, und die Ancilla-Qubits der supraleitenden Routing-Quantenschaltung selektiv zu verwenden, um alle Daten-Cat-Qubits innerhalb des Routingpfades mit einem $|0\rangle_L$-Zustand oder einem $|1\rangle_L$-Zustand eines Wiederholungscodes vorzubereiten,

b) ein CNOT-Gatter durchzuführen, wobei jedes der Daten-Cat-Qubits der logischen Gruppe des logischen Steuer-Qubits die Steuerung ist, wobei jedes Mal das entsprechende Daten-Cat-Qubit der supraleitenden Routing-Quantenschaltung (5) das Ziel ist,

und wobei die Befehlsschaltung (6) ferner dafür eingerichtet ist:

c1) das Routingziel-Qubit mit einem $|+\rangle$ -Zustand vorzubereiten und das Ancilla-Qubit, welches das Routingziel-Qubit und das Pfadende-Qubit verbindet, mit einem $|0\rangle$ -Zustand vorzubereiten,

c2) ein erstes CNOT-Gatter zwischen dem vorbereiteten Ancilla-Qubit und dem Routingziel-Qubit durchzuführen, wobei Ersteres das Ziel ist und Letzteres die Steuerung ist,

c3) ein zweites CNOT-Gatter zwischen dem vorbereiteten Ancilla-Qubit und dem Pfadende-Qubit durchzuführen, wobei Ersteres die Steuerung ist und Letzteres das Ziel ist, und ein drittes CNOT-Gatter zwischen dem Hauptziel-Qubit und dem Routingziel-Qubit durchzuführen, wobei Ersteres das Ziel ist und Letzteres die Steuerung ist,

c4) eine MX-Operation auf dem benachbarten Routingziel-Qubit und dem vorbereiteten Ancilla-Qubit durchzuführen und deren Ergebnis zu multiplizieren, um ein MXX-Ergebnis bereitzustellen,

d1) abhängig vom MXX-Ergebnis ein Quanten-Z-Gatter abzuleiten, das auf den Daten-Cat-Qubits der logischen Gruppe des logischen Steuer-Qubits durchzuführen ist,

d2) eine Messung des Operators Z auf alle Daten-Cat-Qubits in dem Routingpfad anzuwenden und auf der Grundlage des Ergebnisses des Produkts der Ergebnisse ein Quanten-X-Gatter abzuleiten, das auf den Daten-Cat-Qubits der logischen X-Gruppe durchzuführen ist.

9. Quantensystem nach einem der Ansprüche 1 bis 6 zur Durchführung eines Quantengatters, ferner eine supraleitende Routing-Quantenschaltung (5) umfassend, welche umfasst

eine Anzahl n von Datenresonatoren (8), wobei jeder Datenresonator (8) eine jeweilige Resonanzfrequenz aufweist und mit der Befehlsschaltung (6) gekoppelt ist, um ein jeweiliges Daten-Cat-Qubit zu stabilisieren, wobei jeder der n Datenresonatoren (8) der supraleitenden Routing-Quantenschaltung (5) mit einem jeweiligen der n Datenresonatoren (8) der supraleitenden LDPC-Quantenschaltung (4) verbunden ist, und

eine Vielzahl von Ancilla-Resonatoren (10), wobei jeder Ancilla-Resonator eine Ancilla-Resonanzfrequenz aufweist und zwecks Stabilisierung eines Ancilla-Qubits mit der Befehlsschaltung (6) gekoppelt ist,

wobei im Wesentlichen alle Daten-Cat-Qubits mit mindestens zwei Ancilla-Qubits verbunden sind und im Wesentlichen alle Ancilla-Qubits mit mindestens zwei Daten-Cat-Qubits verbunden sind, sodass in der supraleitenden Routing-Quantenschaltung (5) ein durchgehender Pfad definiert werden kann, der jegliche zwei Daten-Cat-Qubits verbindet und aus Paaren von Daten-Cat-Qubits besteht, die über ein Ancilla-Qubit verbunden sind,

wobei die Befehlsschaltung (6) dafür eingerichtet ist, auf der Grundlage eines logischen Steuer-Qubits und eines in die supraleitende LDPC-Quantenschaltung (4) codierten logischen Ziel-Daten-Qubits:

a) einen Routingpfad innerhalb der supraleitenden Routing-Quantenschaltung (5) zu definieren, der alle Daten-Cat-Qubits, die der logischen Gruppe des logischen Steuer-Qubits entsprechen, mit einem Ancilla-Qubit verbindet, das zwischen jedem Paar von Daten-Cat-Qubits eingeschlossen ist, wobei das logische Ziel-Qubit einer logischen X-Gruppe von Daten-Cat-Qubits der supraleitenden LDPC-Quantenschaltung (4) zugeordnet ist, wobei diese Qubits eine ungerade Anzahl von Qubits mit der logischen Gruppe des logischen Ziel-Qubits und eine gerade Anzahl von Qubits mit allen anderen logischen Gruppen in der supraleitenden LDPC-Quantenschaltung gemeinsam haben, sodass der Routingpfad alle Daten-Cat-Qubits der Routing-Schaltung einschließt (5), die mit den Daten-Cat-Qubits der logischen X-Gruppe des logischen Ziel-Qubits bis auf eines verbunden sind, wobei diese Daten-Cat-Qubits interne Routingziel-Qubits bilden und das verbleibende Daten-Cat-Qubit, das mit den Daten-Cat-Qubits der logischen X-Gruppe des logischen Ziel-Qubits verbunden ist, ein Routingziel-Qubit bildet,

wobei der Routingpfad an einem Pfadende-Qubit endet, welches ein dem Routingziel-Qubit benachbartes Daten-Cat-Qubit der supraleitenden Routing-Quantenschaltung (5) ist, und die Ancilla-Qubits der supraleitenden Routing-Quantenschaltung selektiv zu verwenden, um alle Daten-Cat-Qubits innerhalb des Routingpfades mit einem $|0\rangle_L$-Zustand oder einem $|1\rangle_L$-Zustand eines Wiederholungscodes vorzubereiten,

b) ein CNOT-Gatter durchzuführen, wobei jedes der Daten-Cat-Qubits der logischen Gruppe des logischen Steuer-Qubits die Steuerung ist, wobei jedes Mal das entsprechende Daten-Cat-Qubit der supraleitenden Routing-Quantenschaltung (5) das Ziel ist,

c1) ein internes Routingziel-Qubit mit einem $|+\rangle$ -Zustand vorzubereiten und die beiden Ancilla-Qubits des Routingpfades, die dieses interne Routingziel-Qubit umgeben, mit einem $|0\rangle$ -Zustand vorzubereiten,

c2) ein erstes CNOT-Gatter zwischen dem Paar von vorbereiteten Ancilla-Qubits und dem internen Routingziel-Qubit durchzuführen, wobei Erstere das Ziel sind und Letzteres die Steuerung ist,

c3) ein zweites CNOT-Gatter zwischen dem Paar von vorbereiteten Ancilla-Qubits und zwei benachbarten Daten-Cat-Qubits im Routingpfad durchzuführen, wobei Erstere die Steuerung sind und Letztere das Ziel sind, und ein drittes CNOT-Gatter zwischen dem Daten-Cat-Qubit der supraleitenden LDPC-Quantenschaltung (4), das mit dem internen Routingziel-Qubit verbunden ist, und diesem internen Routingziel-Qubit durchzuführen, wobei Ersteres das Ziel ist und Letzteres die Steuerung ist,

c4) eine MX-Operation auf dem internen Routingziel-Qubit und dem Paar von Ancilla-Qubits des Routingpfades, die es umgeben, durchzuführen und deren Ergebnis zu multiplizieren,

wobei die Befehlsschaltung (6) dafür eingerichtet ist, Operationen c1) bis c4) auf allen internen Routingziel-Qubits durchzuführen, und ferner dafür eingerichtet ist

c5) das Routingziel-Qubit mit einem $|+\rangle$ -Zustand vorzubereiten und das Ancilla-Qubit, welches das Routingziel-Qubit und das Pfadende-Qubit verbindet, mit einem $|0\rangle$ -Zustand vorzubereiten,

c6) ein erstes CNOT-Gatter zwischen dem vorbereiteten Ancilla-Qubit und dem Routingziel-Qubit durchzuführen, wobei Ersteres das Ziel ist und Letzteres die Steuerung ist,

c7) ein zweites CNOT-Gatter zwischen dem vorbereiteten Ancilla-Qubit und dem Pfadende-Qubit durchzuführen, wobei Ersteres die Steuerung ist und Letzteres das Ziel ist, und ein drittes CNOT-Gatter zwischen dem Daten-Cat-Qubit der mit dem Routingziel-Qubit verbundenen supraleitenden LDPC-Quantenschaltung (4) und dem Routingziel-Qubit durchzuführen, wobei Ersteres das Ziel ist und Letzteres die Steuerung ist,

c8) eine MX-Operation auf dem Routingziel-Qubit und dem vorbereiteten Ancilla-Qubit durchzuführen und deren Ergebnisse zu multiplizieren,

wobei die Befehlsschaltung (6) ferner dafür eingerichtet ist, die Ergebnisse der Operation c4) miteinander und mit dem Ergebnis der Operation c8) zu multiplizieren, um ein MXX-Ergebnis bereitzustellen,

d1) abhängig vom MXX-Ergebnis ein Quanten-Z-Gatter abzuleiten, das auf den Daten-Cat-Qubits der logischen Gruppe des logischen Steuer-Qubits durchzuführen ist,

d2) eine Messung des Operators Z auf alle Daten-Cat-Qubits in dem Routingpfad mit Ausnahme der internen Routingziel-Qubits anzuwenden und auf der Grundlage des Ergebnisses des Produkts der Ergebnisse ein Quanten-X-Gatter abzuleiten, das auf den Daten-Cat-Qubits der logischen X-Gruppe durchzuführen ist.

10. Quantensystem nach einem der Ansprüche 1 bis 6 zur Durchführung eines Quantengatters, ferner eine supraleitende Routing-Quantenschaltung (5) umfassend, welche umfasst

eine Anzahl n von Datenresonatoren (8), wobei jeder Datenresonator (8) eine jeweilige Resonanzfrequenz aufweist und mit der Befehlsschaltung (6) gekoppelt ist, um ein jeweiliges Daten-Cat-Qubit zu stabilisieren, wobei jeder der n Datenresonatoren (8) der supraleitenden Routing-Quantenschaltung (5) mit einem jeweiligen der n Datenresonatoren (8) der supraleitenden LDPC-Quantenschaltung (4) verbunden ist,

eine Vielzahl von Ancilla-Resonatoren (10), wobei jeder Ancilla-Resonator eine Ancilla-Resonanzfrequenz aufweist und zwecks Stabilisierung eines Ancilla-Qubits mit der Befehlsschaltung (6) gekoppelt ist,

wobei im Wesentlichen alle Daten-Cat-Qubits mit mindestens zwei Ancilla-Qubits verbunden sind und im Wesentlichen alle Ancilla-Qubits mit mindestens zwei Daten-Cat-Qubits verbunden sind, sodass in der supraleitenden Routing-Quantenschaltung (5) ein durchgehender Pfad definiert werden kann, der jegliche zwei Daten-Cat-Qubits verbindet und aus Paaren von Daten-Cat-Qubits besteht, die über ein Ancilla-Qubit verbunden sind,

wobei die supraleitende Routing-Quantenschaltung (5) einen Ziel-Wiederholungscode umfasst, der eine Abfolge von Daten-Qubits und Ancilla-Qubits umfasst,

wobei die Befehlsschaltung (6) dafür eingerichtet ist, auf der Grundlage eines in die supraleitende LDPC-Quantenschaltung (4) codierten logischen Steuer-Qubits:

a) einen Wiederholungscodepfad innerhalb der supraleitenden Routing-Quantenschaltung zu definieren, der alle Daten-Cat-Qubits verbindet, die der logischen Gruppe des logischen Steuer-Qubits entsprechen, wobei zwischen jedem Paar von Daten-Cat-Qubits ein Ancilla-Qubit eingeschlossen ist, wobei der Wiederholungscodepfad sich bis zu einem Pfadende-Qubit erstreckt, welches ein einem Daten-Cat-Qubit des Ziel-Wiederholungscodes benachbartes Daten-Cat-Qubit der supraleitenden Routing-Quantenschaltung (5) ist, wobei sich zwischen dem Pfadende-Qubit und dem benachbarten Daten-Cat-Qubit des Ziel-Wiederholungscodes ein Überbrückungs-Ancilla-Qubit befindet,

b1) alle Daten-Cat-Qubits innerhalb des Wiederholungscodepfades mit einem $|0\rangle$ -Zustand oder einem $|1\rangle$ -Zustand vorzubereiten und die Ancilla-Qubits mit einem $|+\rangle$ -Zustand oder einem $|-\rangle$ -Zustand vorzubereiten,

b2) die Stabilisatoren im Wiederholungscodepfad wiederholt zu messen, um einen Routing-Wiederholungscode in einem $|0\rangle_L$ -Zustand oder einem $|1\rangle_L$ -Zustand im Wiederholungscodepfad vorzubereiten, und

b3) ein CNOT-Gatter durchzuführen, wobei jedes der Daten-Cat-Qubits der logischen Gruppe des logischen Steuer-Qubits die Steuerung ist, wobei jedes Mal das entsprechende Daten-Cat-Qubit in der supraleitenden Routing-Quantenschaltung (5) das Ziel ist,

und wobei die Befehlsschaltung (6) ferner dafür eingerichtet ist:

c1) das Überbrückungs-Ancilla-Qubit mit einem $|+\rangle$ - oder einem $|-\rangle$ - Zustand vorzubereiten,

c2) ein erstes CNOT-Gatter zwischen dem vorbereiteten Überbrückungs-Ancilla-Qubit und dem benachbarten Daten-Cat-Qubit des Wiederholungscodes durchzuführen, wobei Ersteres die Steuerung ist und Letzteres das Ziel ist,

c3) ein zweites CNOT-Gatter zwischen dem vorbereiteten Überbrückungs-Ancilla-Qubit und dem Pfadende-Qubit durchzuführen, wobei Ersteres die Steuerung ist und Letzteres das Ziel ist,

c4) eine MX-Operation auf dem durchgeführten Überbrückungs-Ancilla-Qubit durchzuführen, um ein MXX-Ergebnis bereitzustellen,

d1) abhängig vom MXX-Ergebnis ein Quanten-Z-Gatter abzuleiten, das auf den Daten-Cat-Qubits der logischen Gruppe des logischen Steuer-Qubits durchzuführen ist,

d2) eine Messung des Operators Z auf alle Daten-Cat-Qubits in dem Wiederholungscodepfad anzuwenden und auf der Grundlage des Ergebnisses des Produkts der Ergebnisse ein Quanten-X-Gatter abzuleiten, das auf einer ungeraden Anzahl von Daten-Cat-Qubits des Ziel-Wiederholungscodes durchzuführen ist.

11. Quantensystem nach einem der Ansprüche 7 bis 10, bei dem die Befehlsschaltung (6) ferner dafür eingerichtet ist, die Operationen c1) bis c4) und/oder c5) bis c8) eine Vielzahl von Malen zu wiederholen und eine Mehrheitsentscheidung zu bestimmen, um das MXX-Ergebnis bereitzustellen.

12. Quantensystem nach Anspruch 7 bis 11, bei dem das Quanten-Z-Gatter der Operation d1) und/oder das Quanten-X-Gatter der Operation d2) gespeichert werden, um später angewendet zu werden.

13. Quantensystem nach einem der Ansprüche 1 bis 6 zur Durchführung eines Quantengatters, ferner eine supraleitende Routing-Quantenschaltung (5) umfassend, welche umfasst

eine Anzahl n von Datenresonatoren (8), wobei jeder Datenresonator (8) eine jeweilige Resonanzfrequenz aufweist und mit der Befehlsschaltung (6) gekoppelt ist, um ein jeweiliges Daten-Cat-Qubit zu stabilisieren, wobei jeder der n Datenresonatoren (8) der supraleitenden Routing-Quantenschaltung (5) mit einem jeweiligen der n Datenresonatoren (8) der supraleitenden LDPC-Quantenschaltung (4) verbunden ist,

eine Vielzahl von Ancilla-Resonatoren (10), wobei jeder Ancilla-Resonator eine Ancilla-Resonanzfrequenz aufweist und zwecks Stabilisierung eines Ancilla-Qubits mit der Befehlsschaltung (6) gekoppelt ist,

wobei im Wesentlichen alle Daten-Cat-Qubits mit mindestens zwei Ancilla-Qubits verbunden sind und im Wesentlichen alle Ancilla-Qubits mit mindestens zwei Daten-Cat-Qubits verbunden sind, sodass in der supraleitenden Routing-Quantenschaltung (5) ein durchgehender Pfad definiert werden kann, der jegliche zwei Daten-Cat-Qubits verbindet und aus Paaren von Daten-Cat-Qubits besteht, die über ein Ancilla-Qubit verbunden sind,

wobei die supraleitende LDPC-Quantenschaltung (4) ein logische Ziel-Qubit umfasst, das in einem klassischen LDPC-Code codiert ist, wobei das logische Ziel-Qubit einer logischen X-Gruppe von Daten-Cat-Qubits der supraleitenden LDPC-Quantenschaltung (4) zugeordnet ist, wobei diese Qubits eine ungerade Anzahl von Qubits mit der logischen Gruppe des logischen Ziel-Qubits und eine gerade Anzahl von Qubits mit allen anderen logischen Gruppen in der supraleitenden LDPC-Quantenschaltung gemeinsam haben,

wobei die Befehlsschaltung (6) dafür eingerichtet ist, auf der Grundlage eines Steuer-Wiederholungscodes in der supraleitenden Routing-Quantenschaltung (5), der eine Abfolge von Daten-Cat-Qubits und Ancilla-Qubits umfasst:

a) einen durchgehenden Routingpfad in der Routingschaltung so zu definieren, dass er mindestens eine Vielzahl von Daten-Cat-Qubits einschließt, die jeweils einem jeweiligen Daten-Cat-Qubit des Steuer-Wiederholungscodes benachbart sind,

b1) alle Daten-Cat-Qubits innerhalb des Routingpfades mit einem $|0\rangle$ - Zustand oder einem $|1\rangle$ -Zustand vorzubereiten und die Ancilla-Qubits mit einem $|+\rangle$ - Zustand oder einem $|-\rangle$ -Zustand vorzubereiten,

b2) die Stabilisatoren im Routingpfad wiederholt zu messen, um einen Routing-Wiederholungscode in einem $|0\rangle_L$-Zustand oder einem $|1\rangle_L$-Zustand im Routingpfad vorzubereiten, und

b3) ein CNOT-Gatter durchzuführen, wobei jedes der Daten-Cat-Qubits der logischen Gruppe des Steuer-Wiederholungscodes die Steuerung ist, wobei jedes Mal das entsprechende benachbarte Daten-Cat-Qubit des Routingpfades das Ziel ist,

c1) ein internes Routingziel-Qubit mit einem $|+\rangle$ -Zustand (oder einem $|-\rangle$ -Zustand) vorzubereiten und die beiden Ancilla-Qubits des Routingpfades, die dieses interne Routingziel-Qubit umgeben, mit einem $|0\rangle$ -Zustand (oder einem $|1\rangle$ -Zustand) vorzubereiten,

c2) ein erstes CNOT-Gatter zwischen dem Paar von vorbereiteten Ancilla-Qubits und dem internen Routingziel-Qubit durchzuführen, wobei Erstere das Ziel sind und Letzteres die Steuerung ist,

c3) ein zweites CNOT-Gatter zwischen dem Paar von vorbereiteten Ancilla-Qubits und zwei benachbarten Daten-Cat-Qubits im Routingpfad durchzuführen, wobei Erstere die Steuerung sind und Letztere das Ziel sind, und ein drittes CNOT-Gatter zwischen dem Daten-Cat-Qubit der LDPC-Schaltung 4, das mit dem internen Routingziel-Qubit verbunden ist, und dem entsprechenden internen Routingziel-Qubit durchzuführen, wobei Ersteres das Ziel ist und Letzteres die Steuerung ist,

c4) eine MX-Operation auf dem internen Routingziel-Qubit und dem Paar von Ancilla-Qubits des Routingpfades, die es umgeben, durchzuführen und deren Ergebnis zu multiplizieren,

wobei die Befehlsschaltung (6) ferner dafür eingerichtet ist, Operationen c1) bis c4) auf einem der internen Routingziel-Qubits unter Verwendung eines einzelnen Ancilla-Qubits durchzuführen, Operationen c1) bis c4) auf den internen Routingziel-Qubits durchzuführen und die Ergebnisse der Operation c4) auf allen internen Routingziel-Qubits zu multiplizieren, um ein MXX-Ergebnis bereitzustellen,

d1) abhängig vom MXX-Ergebnis ein Quanten-Z-Gatter abzuleiten, das auf den Daten-Cat-Qubits der logischen Gruppe des Steuer-Wiederholungscodes durchzuführen ist, und

d2) eine Messung des Operators Z auf alle Daten-Cat-Qubits in dem Routingpfad mit Ausnahme der internen Routingziel-Qubits anzuwenden und auf der Grundlage des Ergebnisses des Produkts der Ergebnisse ein Quanten-X-Gatter abzuleiten, das auf den Daten-Cat-Qubits der logischen X-Gruppe des logischen Ziel-LDPC-Qubits durchzuführen ist.

**14.** Quantensystem nach einem der Ansprüche 1 bis 6 zur Durchführung eines Quantengatters, ferner eine supraleitende Routing-Quantenschaltung (5) umfassend, welche umfasst

eine Anzahl n von Datenresonatoren (8), wobei jeder Datenresonator (8) eine jeweilige Resonanzfrequenz aufweist und mit der Befehlsschaltung (6) gekoppelt ist, um ein jeweiliges Daten-Cat-Qubit zu stabilisieren, wobei jeder der n Datenresonatoren (8) der supraleitenden Routing-Quantenschaltung (5) mit einem jeweiligen der n Datenresonatoren (8) der supraleitenden LDPC-Quantenschaltung (4) verbunden ist,

eine Vielzahl von Ancilla-Resonatoren (10), wobei jeder Ancilla-Resonator eine Ancilla-Resonanzfrequenz aufweist und zwecks Stabilisierung eines Ancilla-Qubits mit der Befehlsschaltung (6) gekoppelt ist,

wobei im Wesentlichen alle Daten-Cat-Qubits mit mindestens zwei Ancilla-Qubits verbunden sind und im Wesentlichen alle Ancilla-Qubits mit mindestens zwei Daten-Cat-Qubits verbunden sind, sodass in der supraleitenden Routing-Quantenschaltung (5) ein durchgehender Pfad definiert werden kann, der jegliche zwei Daten-Cat-Qubits verbindet und aus Paaren von Daten-Cat-Qubits besteht, die über ein Ancilla-Qubit verbunden sind,

wobei die supraleitende LDPC-Quantenschaltung (4) ein logische Ziel-Qubit umfasst, das in einem klassischen LDPC-Code codiert ist, wobei das logische Ziel-Qubit einer logischen X-Gruppe von Daten-Cat-Qubits der supraleitenden LDPC-Quantenschaltung (4) zugeordnet ist, wobei diese Qubits eine ungerade Anzahl von Qubits mit der logischen Gruppe des logischen Ziel-Qubits und eine gerade Anzahl von Qubits mit allen anderen logischen Gruppen in der supraleitenden LDPC-Quantenschaltung gemeinsam haben,

wobei die Befehlsschaltung (6) dafür eingerichtet ist, auf der Grundlage eines Steuer-Wiederholungscodes in der supraleitenden Routing-Quantenschaltung (5), der eine Abfolge von Daten-Cat-Qubits und Ancilla-Qubits umfasst:

a) einen durchgehenden Routingpfad in der Routingschaltung so zu definieren, dass er mindestens eine Vielzahl von Daten-Cat-Qubits einschließt, die jeweils einem jeweiligen Daten-Cat-Qubit des Steuer-Wiederholungscodes benachbart sind,

b1) alle Daten-Cat-Qubits innerhalb des Routingpfades mit einem $|0\rangle$ - Zustand oder einem $|1\rangle$ -Zustand vorzubereiten und die Ancilla-Qubits mit einem $|+\rangle$ - Zustand oder einem $|-\rangle$ -Zustand vorzubereiten,

b2) die Stabilisatoren im Routingpfad wiederholt zu messen, um einen Routing-Wiederholungscode in einem $|0\rangle_L$-Zustand oder einem $|1\rangle_L$-Zustand im Routingpfad vorzubereiten, und

b3) ein CNOT-Gatter durchzuführen, wobei jedes der Daten-Cat-Qubits der logischen Gruppe des Steuer-Wiederholungscodes die Steuerung ist, wobei jedes Mal das entsprechende benachbarte Daten-Cat-Qubit des Routingpfades das Ziel ist,

c1) das Routingziel-Qubit mit einem $|+\rangle$ -Zustand (oder einem $|-\rangle$ - Zustand) vorzubereiten und das Ancilla-Qubit, welches das Routingziel-Qubit und das Pfadende-Qubit verbindet, mit einem $|0\rangle$ -Zustand (oder einem $|1\rangle$ -Zustand) vorzubereiten,

c2) ein erstes CNOT-Gatter zwischen dem vorbereiteten Ancilla-Qubit und dem Routingziel-Qubit durchzuführen, wobei Ersteres das Ziel ist und Letzteres die Steuerung ist,

c3) ein zweites CNOT-Gatter zwischen dem vorbereiteten Ancilla-Qubit und dem Pfadende-Qubit durchzuführen, wobei Ersteres die Steuerung ist und Letzteres das Ziel ist, und ein drittes CNOT-Gatter zwischen dem Hauptziel-Qubit und dem Routingziel-Qubit durchzuführen, wobei Ersteres das Ziel ist und Letzteres die Steuerung ist,

c4) eine MX-Operation auf dem benachbarten Routingziel-Qubit und dem vorbereiteten Ancilla-Qubit durchzuführen und deren Ergebnis zu multiplizieren, um ein MXX-Ergebnis bereitzustellen,

d1) abhängig vom MXX-Ergebnis ein Quanten-Z-Gatter abzuleiten, das auf den Daten-Cat-Qubits der logischen Gruppe des Steuer-Wiederholungscodes durchzuführen ist, und

d2) eine Messung des Operators Z auf alle Daten-Cat-Qubits in dem Routingpfad mit Ausnahme der internen Routingziel-Qubits anzuwenden und auf der Grundlage des Ergebnisses des Produkts der Ergebnisse ein Quanten-X-Gatter abzuleiten, das auf den Daten-Cat-Qubits der logischen X-Gruppe des logischen Ziel-LDPC-Qubits durchzuführen ist.

15. Quantensystem nach einem der Ansprüche 1 bis 6 zur Durchführung eines Quantengatters, ferner eine supraleitende Routing-Quantenschaltung (5) umfassend, welche umfasst

eine Anzahl n von Datenresonatoren (8), wobei jeder Datenresonator (8) eine jeweilige Resonanzfrequenz aufweist und mit der Befehlsschaltung (6) gekoppelt ist, um ein jeweiliges Daten-Cat-Qubit zu stabilisieren, wobei jeder der n Datenresonatoren (8) der supraleitenden Routing-Quantenschaltung (5) mit einem jeweiligen der n Datenresonatoren (8) der supraleitenden LDPC-Quantenschaltung (4) verbunden ist,

eine Vielzahl von Ancilla-Resonatoren (10), wobei jeder Ancilla-Resonator eine Ancilla-Resonanzfrequenz aufweist und zwecks Stabilisierung eines Ancilla-Qubits mit der Befehlsschaltung (6) gekoppelt ist,

wobei im Wesentlichen alle Daten-Cat-Qubits mit mindestens zwei Ancilla-Qubits verbunden sind und im Wesentlichen alle Ancilla-Qubits mit mindestens zwei Daten-Cat-Qubits verbunden sind, sodass in der supraleitenden Routing-Quantenschaltung (5) ein durchgehender Pfad definiert werden kann, der jegliche zwei Daten-Cat-Qubits verbindet und aus Paaren von Daten-Cat-Qubits besteht, die über ein Ancilla-Qubit verbunden sind,

wobei die supraleitende LDPC-Quantenschaltung (4) ein logische Ziel-Qubit umfasst, das in einem klassischen LDPC-Code codiert ist, wobei das logische Ziel-Qubit einer logischen X-Gruppe von Daten-Cat-Qubits der supraleitenden LDPC-Quantenschaltung (4) zugeordnet ist, wobei diese Qubits eine ungerade Anzahl von Qubits mit der logischen Gruppe des logischen Ziel-Qubits und eine gerade Anzahl von Qubits mit allen anderen logischen Gruppen in der supraleitenden LDPC-Quantenschaltung gemeinsam haben,

wobei die Befehlsschaltung (6) dafür eingerichtet ist, auf der Grundlage eines Steuer-Wiederholungscodes in der supraleitenden Routing-Quantenschaltung (5), der eine Abfolge von Daten-Cat-Qubits und Ancilla-Qubits umfasst:

a) einen durchgehenden Routingpfad in der Routingschaltung so zu definieren, dass er mindestens eine Vielzahl von Daten-Cat-Qubits einschließt, die jeweils einem jeweiligen Daten-Cat-Qubit des Steuer-Wiederholungscodes benachbart sind,

b1) alle Daten-Cat-Qubits innerhalb des Routingpfades mit einem $|0\rangle$ - Zustand oder einem $|1\rangle$ -Zustand vorzubereiten und die Ancilla-Qubits mit einem $|+\rangle$ - Zustand oder einem $|-\rangle$ -Zustand vorzubereiten,

b2) die Stabilisatoren im Routingpfad wiederholt zu messen, um einen Routing-Wiederholungscode in einem $|0\rangle_L$-Zustand oder einem $|1\rangle_L$-Zustand im Routingpfad vorzubereiten, und

b3) ein CNOT-Gatter durchzuführen, wobei jedes der Daten-Cat-Qubits der logischen Gruppe des Steuer-Wiederholungscodes die Steuerung ist, wobei jedes Mal das entsprechende benachbarte Daten-Cat-Qubit des Routingpfades das Ziel ist,

c1) ein internes Routingziel-Qubit mit einem $|+\rangle$ -Zustand vorzubereiten und die beiden Ancilla-Qubits des Routingpfades, die dieses interne Routingziel-Qubit umgeben, mit einem $|0\rangle$ -Zustand vorzubereiten,

c2) ein erstes CNOT-Gatter zwischen dem Paar von vorbereiteten Ancilla-Qubits und dem internen Routingziel-Qubit durchzuführen, wobei Erstere das Ziel sind und Letzteres die Steuerung ist,

c3) ein zweites CNOT-Gatter zwischen dem Paar von vorbereiteten Ancilla-Qubits und zwei benachbarten Daten-Cat-Qubits im Routingpfad durchzuführen, wobei Erstere die Steuerung sind und Letztere das Ziel sind, und ein drittes CNOT-Gatter zwischen dem Daten-Cat-Qubit der LDPC-Schaltung 4, das mit dem internen Routingziel-Qubit verbunden ist, und dem entsprechenden internen Routingziel-Qubit durchzuführen, wobei Ersteres das Ziel ist und Letzteres die Steuerung ist,

c4) eine MX-Operation auf dem internen Routingziel-Qubit und dem Paar von Ancilla-Qubits des Routingpfades, die es umgeben, durchzuführen und deren Ergebnis zu multiplizieren,

wobei die Befehlsschaltung (6) dafür eingerichtet ist, Operationen c1) bis c4) auf allen internen Routingziel-Qubits durchzuführen, und ferner dafür eingerichtet ist

c5) das Routingziel-Qubit mit einem $|+\rangle$ -Zustand vorzubereiten und das Ancilla-Qubit, welches das Routingziel-Qubit und das Pfadende-Qubit verbindet, mit einem $|0\rangle$ -Zustand vorzubereiten,

c6) ein erstes CNOT-Gatter zwischen dem vorbereiteten Ancilla-Qubit und dem Routingziel-Qubit durchzuführen, wobei Ersteres das Ziel ist und Letzteres die Steuerung ist,

c7) ein zweites CNOT-Gatter zwischen dem vorbereiteten Ancilla-Qubit und dem Pfadende-Qubit durchzuführen, wobei Ersteres die Steuerung ist und Letzteres das Ziel ist, und ein drittes CNOT-Gatter zwischen dem Daten-Cat-Qubit der mit dem Routingziel-Qubit verbundenen supraleitenden LDPC-Quantenschaltung (4) und dem Routingziel-Qubit durchzuführen, wobei Ersteres das Ziel ist und Letzteres die Steuerung ist,

c8) eine MX-Operation auf dem Routingziel-Qubit und dem vorbereiteten Ancilla-Qubit durchzuführen und deren Ergebnisse zu multiplizieren,

wobei die Befehlsschaltung (6) ferner dafür eingerichtet ist, die Ergebnisse der Operation c4) miteinander und mit dem Ergebnis der Operation c8) zu multiplizieren, um ein MXX-Ergebnis bereitzustellen,

d1) abhängig vom MXX-Ergebnis ein Quanten-Z-Gatter abzuleiten, das auf den Daten-Cat-Qubits der logischen Gruppe des logischen Steuer-Qubits durchzuführen ist,

d2) eine Messung des Operators Z auf alle Daten-Cat-Qubits in dem Routingpfad mit Ausnahme der internen Routingziel-Qubits anzuwenden und auf der Grundlage des Ergebnisses des Produkts der Ergebnisse ein Quanten-X-Gatter abzuleiten, das auf den Daten-Cat-Qubits der logischen X-Gruppe durchzuführen ist.

## Revendications

1. Système quantique pour réaliser un code de correction d'erreur de LDPC classique comprenant :

- un circuit de commande (6) pour appliquer de manière sélective un rayonnement,
- un circuit quantique supraconducteur de LDPC comprenant

- un nombre n de résonateurs de données (8), chaque résonateur de données (8) étant couplé audit circuit de commande (6) pour stabiliser un bit quantique de chat de données respectif,
- lesdits n résonateurs de données (8) étant agencés sur ledit circuit quantique supraconducteur de LDPC dans une limite présentant une forme sensiblement trapézoïdale, de telle sorte que chacun desdits n résonateurs de données (8) corresponde sensiblement à l'intersection d'une rangée et d'une colonne d'une géométrie en forme de grille formée dans ladite limite, ladite géométrie en forme de grille présentant un nombre de rangées égal ou supérieur à trois, et de telle sorte que la rangée inférieure et la rangée supérieure de ladite géométrie en forme de grille forment les bases de ladite forme sensiblement trapézoïdale, ladite rangée inférieure comprenant un nombre 1 de résonateurs de données qui est égal ou supérieur à six,
- lesdits n bits quantiques de chat données étant associés en motifs stabilisateurs, chacun desdits motifs stabilisateurs s'étendant sur au moins deux rangées consécutives composées d'une rangée supérieure comprenant un seul et une ou plusieurs rangées inférieures comprenant conjointement au moins deux bits quantiques de chat de données (8) qui ne sont pas distants de plus sept colonnes et qui ne sont pas chacun distants de plus de sept colonnes de la colonne de ladite rangée supérieure, au moins deux desdits motifs stabilisateurs étant distincts et tous les motifs stabilisateurs comprenant un bit quantique de chat de données de la rangée inférieure, s'étendent sur un nombre choisi de rangées compris entre deux et quatre de telle sorte que les bits quantiques de chat de données des rangées allant de la rangée inférieure jusqu'au dit nombre choisi de rangées moins une constituent des bits quantiques de chat de données de base logique, chaque bit quantique de chat de données de base logique étant associé à un groupe de base logique respectif, chaque groupe de données de base logique étant obtenu en attribuant virtuellement à son bit quantique de chat de données de base logique associé un état opposé à celui de tous les autres bits quantiques de chat de données de base logique, en appliquant une règle d'automate cellulaire à tous les bits quantiques de chat de données des autres rangées de la géométrie en forme de grille pour déterminer des états virtuels respectifs, ladite règle d'automate cellulaire étant déterminée pour chaque bit quantique de chat de données sur la base du motif stabilisateur pour lequel ce bit quantique dechat de données est ledit unique bit quantique de chat de données de la rangée supérieure du motif stabilisateur, et en définissant ledit groupe de base logique sur la base des bits quantiques de chat de données qui présentent le même état virtuel,
- lesdits groupes de base logiques pouvant être combinés pour définir un ensemble de k groupes logiques, chaque groupe logique étant une combinaison de groupes de base logiques, de telle sorte que k soit égal ou inférieur au nombre de groupes de base logiques et qu'aucun groupe logique ne puisse être obtenu en combinant d'autres groupes logiques, de telle sorte que le code de LDPC classique résultant présente une valeur kd/n supérieur à 1, d étant la distance dudit code de LDPC classique résultant, ledit circuit de commande (6) étant agencé pour coder un bit quantique logique respectif dans chacun desdits k groupes logiques,

- ledit circuit quantique supraconducteur de LDPC (4) étant en outre agencé pour déterminer un syndrome d'erreur en effectuant un contrôle de parité sur les bits quantiques de chat de données de chaque motif stabilisateur.

2. Système quantique selon la revendication 1, dans lequel ledit circuit quantique supraconducteur de LDPC comprend en outre une pluralité de résonateurs auxiliaires (10), chaque résonateur auxiliaire (10) étant couplé audit circuit de commande (6) pour stabiliser un bit quantique auxiliaire respectif, et chaque bit quantique auxiliaire étant associé à un motif stabilisateur respectif, ledit circuit de commande (6) étant en outre agencé pour déterminer de manière répétée ledit syndrome d'erreur dans chaque motif stabilisateur en préparant son bit quantique auxiliaire (10) associé dans un état $|-\rangle$ or $|+\rangle$, en effectuant des portes quantiques avec les bits quantiques de chat de données du motif stabilisateur, et en mesurant l'auxiliaire associé pour déterminer la présence d'un renversement de phase.

3. Système quantique selon la revendication 1 ou 2, dans lequel chaque motif stabilisateur est sélectionné dans le groupe comprenant : une forme en T inversé ; une forme en V inversé ; une forme en L ; une forme en L inversé ; une diagonale avant ; une diagonale arrière ; une ligne droite.

4. Système quantique selon l'une des revendications précédentes, dans lequel les motifs stabilisateurs comprennent moins de sept bits quantiques de chat de données, et/ou l'association de bits quantiques de chat de données couvrant au maximum quatre rangées consécutives.

5. Système quantique selon l'une des revendications précédentes, dans lequel sensiblement tous les bits quantiques de chat de données d'une rangée donnée présentent le même motif stabilisateur.

6. Système quantique selon l'une des revendications précédentes, dans lequel les groupes logiques sont chacun identiques à un groupe respectif des groupes de base logiques.

7. Système quantique selon l'une des revendications précédentes, pour réaliser une porte quantique, comprenant en outre un circuit quantique supraconducteur de routage (5) comprenant un nombre n de résonateurs de données (8), chaque résonateur de données (8) présentant une fréquence de résonance respective et étant couplé audit circuit de commande (6) pour stabiliser un bit quantique de chat de données respectif, chacun desdits n résonateurs de données (8) dudit circuit quantique supraconducteur de routage étant connecté à un résonateur de données respectif desdits n résonateurs de données (8) dudit circuit quantique supraconducteur de LDPC,

une pluralité de résonateurs auxiliaires (10), chaque résonateur auxiliaire présentant une fréquence de résonance auxiliaire couplée audit circuit de commande (6) pour stabiliser un bit quantique auxiliaire, sensiblement tous les bits quantiques de chat de données étant connectés à au moins deux bits quantiques auxiliaires, et sensiblement tous les bits quantiques auxiliaires étant connectés à au moins deux bits quantiques de chat de données, de telle sorte qu'un chemin continu puisse être défini dans ledit circuit quantique supraconducteur de routage (5) qui connecte deux bits quantiques de chat de données quelconques et soit composé de paires de bits quantiques de chat de données qui sont connectés via un bit quantique auxiliaire, ledit circuit de commande (6) étant agencé, sur la base d'un bit quantique logique de contrôle et d'un bit quantique de chat de données logique cible encodé dans ledit circuit quantique supraconducteur de LDPC (4) :

a) pour définir un chemin de routage dans ledit circuit quantique supraconducteur de routage (5) qui connecte tous les bits quantiques de chat de données correspondant au groupe logique dudit bit quantique logique de contrôle à un bit quantique auxiliaire qui est inclus entre chaque paire de bits quantiques de chat de données, dans lequel le bit quantique logique cible est associé à un groupe logique X de bits quantiques de chat de données dudit circuit quantique supraconducteur de LDPC (4), lesquels bits quantiques partagent un nombre impair de bits quantiques avec le groupe logique du bit quantique logique cible et un nombre pair de bits quantiques avec tous les autres groupes logiques du circuit quantique supraconducteur de LDPC (4) de telle sorte que le chemin de routage inclue tous les bits quantiques de chat de données du circuit de routage (5) qui sont connectés aux bits quantiques de chat de données du groupe logique X du bit quantique logique cible, qui forment des bits quantiques cibles de routage internes, il y a au moins un bit quantique cible de routage interne. et pour utiliser de manière sélective les bits quantiques auxiliaires dudit circuit quantique supraconducteur de routage (5) pour préparer tous les bits quantiques de chat de données dans ledit chemin de routage avec un état $|0\rangle_L$ ou un état $|1\rangle_L$ d'un code de répétition,

b) pour réaliser une porte CNOT avec chacun des bits quantiques de chat de données du groupe logique dudit bit quantique logique de contrôle étant le contrôle, chaque fois avec le bit quantique de chat de données correspondant dudit circuit quantique supraconducteur de routage (5) étant la cible,

c1) pour préparer un bit quantique cible de routage interne avec un état $|+\rangle$ , et pour préparer les deux bits quantiques auxiliaires du chemin de routage entourant ce bit quantique cible de routage interne avec un état $|0\rangle$,

c2) pour réaliser une première porte CNOT entre la paire de bits quantiques auxiliaires préparés et le bit quantique cible de routage interne, avec le premier étant la cible et le second étant le contrôle,

c3) pour effectuer une deuxième porte CNOT entre la paire de bits quantiques auxiliaires préparés et deux bits quantiques de chat de données voisins dans le chemin de routage, avec le premier étant le contrôle et le second la cible, et une troisième porte CNOT entre le bit quantique de chat de données du circuit quantique supraconducteur de LDPC (4) connecté au bit quantique cible de routage interne et ce bit quantique cible de routage interne, avec le premier étant la cible et le second étant le contrôle,

c4) pour réaliser une opération de MX sur le bit quantique cible de routage interne et la paire de bits quantiques auxiliaires du chemin de routage qui l'entoure, et pour multiplier leur résultat,

ledit circuit de commande (6) étant en outre agencé pour effectuer les opérations c1) à c4) sur l'un des bits quantiques cibles de routage interne à l'aide d'un seul bit quantique auxiliaire, pour effectuer les opérations c1) à c4) sur les bits quantiques cibles de routage interne, et pour multiplier les résultats de l'opération c4) sur tous les bits quantiques cibles de routage interne pour fournir un résultat de MXX,

ledit circuit de commande (6) étant en outre agencé

d1) en fonction du résultat de MXX, pour dériver une porte Z quantique à réaliser sur les bits quantiques de chat de données du groupe logique du bit quantique logique de contrôle, et

d2) pour appliquer une mesure de l'opérateur Z sur tous les bits quantiques de chat de données dans ledit chemin de routage à l'exception des bits quantiques cibles de routage interne, et, sur la base du résultat du produit des résultats, pour dériver une porte X quantique à réaliser sur les bits quantiques de chat de données du groupe logique X.

8. Système quantique selon l'une des revendications 1 à 6, pour réaliser une porte quantique, comprenant en outre un circuit quantique supraconducteur de routage (5) comprenant

un nombre n de résonateurs de données (8), chaque résonateur de données (8) présentant une fréquence de résonance respective et étant couplé audit circuit de commande (6) pour stabiliser un bit quantique de chat de données respectif, chacun desdits n résonateurs de données (8) dudit circuit quantique supraconducteur de routage (5) étant connecté à un résonateur de données respectif desdits n résonateurs de données (8) dudit circuit quantique supraconducteur de LDPC (4),

une pluralité de résonateurs auxiliaires (10), chaque résonateur auxiliaire présentant une fréquence de résonance auxiliaire couplée audit circuit de commande (6) pour stabiliser un bit quantique auxiliaire,

sensiblement tous les bits quantiques de chat de données étant connectés à au moins deux bits quantiques auxiliaires, et sensiblement tous les bits quantiques auxiliaires étant connectés à au moins deux bits quantiques de chat de données, de telle sorte qu'un chemin continu puisse être défini dans ledit circuit quantique supraconducteur de routage (5) qui connecte deux bits quantiques de chat de données quelconques et est composé de paires de bits quantiques de chat de données qui sont connectés via un bit quantique auxiliaire,

ledit circuit de commande (6) étant agencé, sur la base d'un bit quantique logique de contrôle et d'un bit quantique de chat de données logiques cibles encodés dans ledit circuit quantique supraconducteur de LDPC (4) :

a ) pour définir un chemin de routage dans ledit circuit quantique supraconducteur de routage (5) qui connecte tous les bits quantiques de chat de données correspondant au groupe logique dudit bit quantique logique de contrôle, un bit quantique auxiliaire étant inclus entre chaque paire de bits quantiques de chat de données, dans lequel le bit quantique logique cible comprend un seul bit quantique de chat de données dudit circuit quantique supraconducteur de LDPC (4) qui assure le support pour l'opérateur logique X du bit quantique logique cible et forme un bit quantique cible principal et son bit quantique de chat de données connecté du circuit quantique supraconducteur de routage (5) forme un bit quantique cible de routage, le chemin de routage se terminant au niveau d'un bit quantique de fin de chemin, qui est un bit quantique de chat de données du circuit quantique supraconducteur de routage (5) voisin dudit bit quantique cible de routage et pour utiliser de manière sélective les bits quantiques auxiliaires dudit circuit quantique supraconducteur de routage pour préparer tous les bits quantiques de chat de données dans ledit chemin de routage avec un état $|0\rangle_L$ ou un état $|1\rangle_L$ d'un code de répétition,

b) pour réaliser une porte CNOT avec chacun des bits quantiques de chat de données du groupe logique dudit bit quantique logique de contrôle étant le contrôle, chaque fois avec le bit quantique de chat de données correspondant dudit circuit quantique supraconducteur de routage (5) étant la cible,

et ledit circuit de commande (6) étant en outre agencé :

c1) pour préparer le bit quantique cible de routage avec un état $|+\rangle$, et pour préparer le bit quantique auxiliaire connectant ledit bit quantique cible de routage et ledit bit quantique de chemin final avec un état $|0\rangle$,

c2) pour réaliser une première porte CNOT entre le bit quantique auxiliaire préparé et le bit quantique cible de routage avec le premier étant la cible et le second étant le contrôle,

c3) pour effectuer une deuxième porte CNOT entre le bit quantique auxiliaire préparé et le bit quantique de fin de chemin, avec le premier étant le contrôle et le second la cible, et une troisième porte CNOT entre ledit bit quantique cible principal et ledit bit quantique cible de routage, avec le premier étant la cible et le second le contrôle,

c4) pour réaliser une opération de MX sur le bit quantique cible de routage voisin et le bit quantique auxiliaire préparé, et pour multiplier leur résultat afin de fournir un résultat de MXX,

d1) en fonction du résultat de MXX, pour dériver une porte Z quantique à réaliser sur les bits quantiques de chat de données du groupe logique du bit quantique logique de contrôle,

d2) pour appliquer une mesure de l'opérateur Z sur tous les bits quantiques de chat de données dans ledit chemin de routage et, sur la base du résultat du produit des résultats, de dériver une porte X quantique à réaliser sur les bits quantiques de chat de données du groupe logique X.

9. Système quantique selon l'une des revendications 1 à 6, pour réaliser une porte quantique, comprenant en outre un circuit quantique supraconducteur de routage (5) comprenant

un nombre n de résonateurs de données (8), chaque résonateur de données (8) présentant une fréquence de résonance respective et étant couplé audit circuit de commande (6) pour stabiliser un bit quantique de chat de données respectif, chacun desdits n résonateurs de données (8) dudit circuit quantique supraconducteur de routage (5) étant connecté à un résonateur de données respectif desdits n résonateurs de données (8) dudit circuit quantique supraconducteur de LDPC (4),

une pluralité de résonateurs auxiliaires (10), chaque résonateur auxiliaire présentant une fréquence de résonance auxiliaire couplée audit circuit de commande (6) pour stabiliser un bit quantique auxiliaire,

sensiblement tous les bits quantiques de chat de données étant connectés à au moins deux bits quantiques auxiliaires, et sensiblement tous les bits quantiques auxiliaires étant connectés à au moins deux bits quantiques de chat de données, de telle sorte qu'un chemin continu puisse être défini dans ledit circuit quantique supraconducteur de routage (5) qui connecte deux bits quantiques de chat de données quelconques et est composé de paires de bits quantiques de chat de données qui sont connectés via un bit quantique auxiliaire, ledit circuit de commande (6) étant agencé, sur la base d'un bit quantique logique de contrôle et d'un bit quantique de chat de données logiques cibles encodés dans ledit circuit quantique supraconducteur de LDPC (4) :

a ) pour définir un chemin de routage dans ledit circuit quantique supraconducteur de routage (5) qui connecte tous les bits quantiques de chat de données correspondant au groupe logique dudit bit quantique logique de contrôle, avec un bit quantique auxiliaire étant inclus entre chaque paire de bits quantiques de chat de données, dans lequel le bit quantique logique cible est associé à un groupe logique X de bits quantiques de chat de données dudit circuit quantique supraconducteur de LDPC (4), lesquels bits quantiques partagent un nombre impair de bits quantiques avec le groupe logique du bit quantique logique cible et un nombre pair de bits quantiques avec tous les autres groupes logiques du circuit quantique supraconducteur de LDPC de telle sorte que le chemin de routage inclue tous les bits quantiques de chat de données du circuit de routage (5) qui sont connectés aux bits quantiques de chat de données du groupe logique X du bit quantique logique cible, à l'exception d'un seul, ces bits quantiques de chat de données formant des bits quantiques cibles de routage internes, et le bit quantique de chat de données restant, connecté aux bits quantiques de chat de données du groupe logique X du bit quantique logique cible, formant un bit quantique cible de routage,

le chemin de routage se terminant au niveau d'un bit quantique de fin de chemin qui est un bit quantique de chat de données du circuit quantique supraconducteur de routage (5) voisin dudit bit quantique cible de routage, et pour utiliser de manière sélective les bits quantiques auxiliaires dudit circuit quantique supraconducteur de routage pour préparer tous les bits quantiques de chat de données du chemin de routage avec un état $|0\rangle_L$ ou un état $|1\rangle_L$ d'un code de répétition,

b) pour réaliser une porte CNOT avec chacun des bits quantiques de chat de données du groupe logique dudit bit quantique logique de contrôle étant le contrôle, chaque fois avec le bit quantique de chat de données correspondant dudit circuit quantique supraconducteur de routage (5) étant la cible,

c1) pour préparer un bit quantique cible de routage interne avec un état $|+\rangle$, et pour préparer les deux bits quantiques auxiliaires du chemin de routage entourant ces bits quantiques cibles de routage interne avec un état $|0\rangle$,

c2) pour réaliser une première porte CNOT entre la paire de bits quantiques auxiliaires préparés et le bit quantique cible de routage interne, avec le premier étant la cible et le second étant le contrôle,

c3) pour réaliser une deuxième porte CNOT entre la paire de bits quantiques auxiliaires préparés et deux bits quantiques de chat de données voisins dans le chemin de routage, avec le premier étant le contrôle et le second étant la cible, et une troisième porte CNOT entre le bit quantique de chat de données du circuit quantique supraconducteur de LDPC (4) connecté au bit quantique cible de routage interne et ce bit quantique cible de routage interne, avec le premier étant la cible et le second étant le contrôle,

c4) pour réaliser une opération de MX sur le bit quantique cible de routage interne et la paire de bits quantiques auxiliaires du chemin de routage qui l'entoure, et pour multiplier leur résultat,

ledit circuit de commande (6) étant agencé pour réaliser les opérations c1) à c4) sur tous les bits quantiques cibles de routage interne, et étant en outre agencé

c5) pour préparer le bit quantique cible de routage avec un état $|+\rangle$, et pour préparer le bit quantique auxiliaire connectant le bit quantique cible de routage et le bit quantique de fin de chemin avec un état $|0\rangle$,

c6) pour effectuer une première porte CNOT entre le bit quantique auxiliaire préparé et le bit quantique cible de routage, avec le premier étant la cible et le second étant le contrôle,

c7) pour réaliser une deuxième porte CNOT entre le bit quantique auxiliaire préparé et le bit quantique de fin de chemin, avec le premier étant le contrôle et le second étant la cible, et une troisième porte CNOT entre le bit quantique de chat de données du circuit quantique supraconducteur de LDPC (4) connecté au bit quantique cible de routage et le bit quantique cible de routage, avec le premier étant la cible et le second étant le contrôle,

c8) pour réaliser une opération de MX sur le bit quantique cible de routage et le bit quantique auxiliaire préparé, et pour multiplier leur résultat,

ledit circuit de commande (6) étant en outre agencé pour multiplier les résultats de l'opération c4) ensemble et avec le résultat de l'opération c8) pour fournir un résultat de MXX,

d1) en fonction du résultat de MXX, pour dériver une porte Z quantique à réaliser sur les bits quantiques de chat de données du groupe logique du bit quantique logique de contrôle,

d2) pour appliquer une mesure de l'opérateur Z sur tous les bits quantiques de chat de données dans ledit chemin de routage à l'exception des bits quantiques cibles de routage interne, et, sur la base du résultat du produit des résultats, pour dériver une porte X quantique à réaliser sur les bits quantiques de chat de données du groupe logique X.

**10.** Système quantique selon l'une des revendications 1 à 6, pour réaliser une porte quantique, comprenant en outre un circuit quantique supraconducteur de routage (5) comprenant

un nombre n de résonateurs de données (8), chaque résonateur de données (8) présentant une fréquence de résonance respective et étant couplé audit circuit de commande (6) pour stabiliser un bit quantique de chat de données respectif, chacun des n résonateurs de données (8) dudit circuit quantique supraconducteur de routage (5) étant connecté à un résonateur de données respectif des n résonateurs de données (8) dudit circuit quantique supraconducteur de LDPC (4)

une pluralité de résonateurs auxiliaires (10), chaque résonateur auxiliaire présentant une fréquence de résonance auxiliaire couplée audit circuit de commande (6) pour stabiliser un bit quantique auxiliaire, sensiblement tous les bits quantiques de chat de données étant connectés à au moins deux bits quantiques auxiliaires, et sensiblement tous les bits quantiques auxiliaires étant connectés à au moins deux bits quantiques de chat de données, de telle sorte qu'un chemin continu puisse être défini dans ledit circuit quantique supraconducteur de routage (5) qui connecte deux bits quantiques de chat de données quelconques et est composé de paires de bits quantiques de chat de données qui sont connectés via un bit quantique auxiliaire, ledit circuit quantique supraconducteur de routage (5) comprenant un code de répétition cible comprenant une succession de bits quantiques de chat de données et de bits quantiques auxiliaires,

ledit circuit de commande (6) étant agencé, sur la base d'un bit quantique logique de contrôle encodé dans ledit circuit quantique supraconducteur de LDPC (4) :

a) pour définir un chemin de code de répétition dans ledit circuit quantique supraconducteur de routage qui connecte tous les bits quantiques de chat de données correspondant au groupe logique dudit bit quantique logique de contrôle avec un bit quantique auxiliaire étant inclus entre chaque paire de bits quantiques de chat de données, ledit chemin de code de répétition s'étendant jusqu'à un bit quantique de fin de chemin qui est un bit quantique de chat de données du circuit quantique supraconducteur de routage (5) voisin d'un bit quantique de chat de données dudit code de répétition cible, avec un bit quantique auxiliaire de pontage entre ledit bit quantique de fin de chemin et ledit bit quantique de chat de données voisin dudit code de répétition cible,

b1) pour préparer tous les bits quantiques de chat de données dans ledit chemin de code de répétition avec un état $|0\rangle$ ou un état $|1\rangle$, et les bits quantiques auxiliaires avec un état $|+\rangle$ ou un état $|-\rangle$,

b2) pour mesurer de manière répétée les stabilisateurs dans le chemin du code de répétition pour préparer un code de répétition de routage dans un état $|0\rangle_L$ ou un état $|1\rangle_L$ dans le chemin de code de répétition, et

b3) pour réaliser une porte CNOT, avec chacun des bits quantiques de chat de données du groupe logique dudit bit quantique logique de contrôle étant le contrôle, chaque fois avec le bit quantique de chat de données correspondant dans le circuit quantique supraconducteur de routage (5) étant la cible

et ledit circuit de commande (6) étant en outre agencé :

c1) pour préparer le bit quantique auxiliaire de pontage avec un état $|+\rangle$ ou un état $|-\rangle$,

c2) pour réaliser une première porte CNOT entre le bit quantique auxiliaire de pontage préparé et le bit quantique de chat de données voisin du code de répétition, avec le premier étant le contrôle et le second étant la cible,

c3) pour réaliser une deuxième porte CNOT entre le bit quantique auxiliaire de pontage préparé et le bit quantique de fin de chemin, avec le premier étant le contrôle et le second étant la cible,

c4) pour réaliser une opération de MX sur le bit quantique auxiliaire de pontage réalisé pour fournir un résultat de MXX,

d1) en fonction du résultat de MXX, pour dériver une porte Z quantique à réaliser sur les bits quantiques de chat de données du groupe logique du bit quantique logique de contrôle,

d2) pour appliquer une mesure de l'opérateur Z sur tous les bits quantiques de chat de données dans ledit chemin de code de répétition, et, sur la base du résultat du produit des résultats, pour dériver une porte X quantique à réaliser sur un nombre impair de bits quantiques de chat de données du code de répétition cible.

11. Système quantique selon l'une des revendications 7 à 10, dans lequel ledit circuit de commande (6) est en outre agencé pour répéter les opérations c1) à c4) et/ou c5) à c8) une pluralité de fois, et pour déterminer un vote majoritaire pour fournir le résultat de MXX.

12. Système quantique selon l'une des revendications 7 à 11, dans lequel la porte Z quantique de l'opération d1) et/ou les portes quantiques X de l'opération d2) sont stockées afin d'être appliquées plus tard.

13. Système quantique selon l'une des revendications 1 à 6, pour réaliser une porte quantique, comprenant en outre un circuit quantique supraconducteur de routage (5) comprenant

un nombre n de résonateurs de données (8), chaque résonateur de données (8) présentant une fréquence de résonance respective et étant couplé audit circuit de commande (6) pour stabiliser un bit quantique de chat de données respectif, chacun desdits n résonateurs de données (8) dudit circuit quantique supraconducteur de routage (5) étant connecté à un résonateur de données respectif desdits n résonateurs de données (8) dudit circuit quantique supraconducteur de LDPC (4)

une pluralité de résonateurs auxiliaires (10), chaque résonateur auxiliaire présentant une fréquence de résonance auxiliaire couplée audit circuit de commande (6) pour stabiliser un bit quantique auxiliaire,

sensiblement tous les bits quantiques de chat de données étant connectés à au moins deux bits quantiques auxiliaires, et sensiblement tous les bits quantiques auxiliaires étant connectés à au moins deux bits quantiques de chat de données, de telle sorte qu'un chemin continu puisse être défini dans ledit circuit quantique supraconducteur de routage (5) qui connecte deux bits quantiques de chat de données quelconques et est composé de paires de bits quantiques de chat de données qui sont connectés via un bit quantique auxiliaire, ledit circuit quantique supraconducteur de LDPC (4) comprenant un bit quantique logique cible encodé dans un code de LDPC classique, dans lequel le bit quantique logique cible est associé à un groupe logique X de bits quantiques de chat de données dudit circuit quantique supraconducteur de LDPC (4), lesquels bits quantiques partagent un nombre impair de bits quantiques avec le groupe logique du bit quantique logique cible et un nombre pair de bits quantiques avec tous les autres groupes logiques du circuit quantique supraconducteur de LDPC, ledit circuit de commande (6) étant agencé, sur la base d'un code de répétition de contrôle dans ledit circuit quantique supraconducteur de routage (5) comprenant une succession de bits quantiques de chat de données et de bits quantiques auxiliaires :

a) pour définir un chemin de routage continu dans le circuit de routage de telle sorte qu'il inclue au moins une pluralité de bits quantiques de chat de données qui sont chacun adjacents à un bit quantique de chat de données respectif du code de répétition de contrôle,

b1) pour préparer tous les bits quantiques de chat de données dans ledit chemin de routage avec un état $|0\rangle$ ou un état $|1\rangle$, et les bits quantiques auxiliaires avec un état $|+\rangle$ ou un état $|-\rangle$,

b2) pour mesurer de manière répétée les stabilisateurs dans le chemin de routage pour préparer un code de répétition de routage dans un état $|0\rangle_L$ ou un état $|1\rangle_L$ dans le chemin de routage, et

b3) pour réaliser une porte CNOT avec chacun des bits quantiques de chat de données du groupe logique dudit code de répétition de contrôle étant le contrôle, chaque fois avec le bit quantique de chat de données adjacent correspondant du chemin de routage étant la cible,

c1) préparer un bit quantique cible de routage interne avec un état $|+\rangle$ (ou un état $|-\rangle$), et préparer les deux bits quantiques auxiliaires du chemin de routage entourant ce bit quantique cible de routage interne avec un état $|0\rangle$ (ou un état $|1\rangle$),

c2) réaliser une première porte CNOT entre la paire de bits quantiques auxiliaires préparés et le bit quantique cible de routage interne, avec le premier étant la cible et le second étant le contrôle,

c3) réaliser une deuxième porte CNOT entre la paire de bits quantiques auxiliaires préparés et deux bits quantiques de chat de données voisins dans le chemin de routage, avec le premier étant le contrôle et le second étant la cible, et une troisième porte CNOT entre le bit quantique de chat de données du circuit LDPC 4 connecté au bit quantique cible de routage interne et le bit quantique cible de routage interne correspondant, avec le premier étant la cible et le second étant le contrôle,

c4) effectuer une opération de MX sur le bit quantique cible de routage interne et la paire de bits quantiques auxiliaires du chemin de routage qui l'entoure, et pour multiplier leur résultat,

ledit circuit de commande (6) étant en outre agencé pour réaliser les opérations c1) à c4) sur l'un des bits quantiques cibles de routage interne à l'aide d'un seul bit quantique auxiliaire, pour réaliser les opérations c1) à c4) sur les bits quantiques cibles de routage interne, et pour multiplier les résultats de l'opération c4) sur tous les bits quantiques cibles de routage interne pour fournir un résultat de MXX,

d1) en fonction du résultat de MXX, dériver une porte Z quantique à réaliser sur les bits quantiques de chat de données du groupe logique du code de répétition de contrôle, et

d2) appliquer une mesure de l'opérateur Z sur tous les bits quantiques de chat de données dans ledit chemin de routage à l'exception des bits quantiques cibles de routage interne, et, sur la base du résultat du produit des résultats, dériver une porte X quantique à réaliser sur les bits quantiques de chat de données du groupe logique X du bit quantique logique LDPC cible.

14. Système quantique selon l'une des revendications 1 à 6, pour réaliser une porte quantique, comprenant en outre un circuit quantique supraconducteur de routage (5) comprenant

un nombre n de résonateurs de données (8), chaque résonateur de données (8) présentant une fréquence de résonance respective et étant couplé audit circuit de commande (6) pour stabiliser un bit quantique de chat de données respectif, chacun desdits n résonateurs de données (8) dudit circuit quantique supraconducteur de routage (5) étant connecté à un résonateur de données respectif desdits n résonateurs de données (8) dudit circuit quantique supraconducteur de LDPC (4)

une pluralité de résonateurs auxiliaires (10), chaque résonateur auxiliaire présentant une fréquence de résonance auxiliaire couplée audit circuit de commande (6) pour stabiliser un bit quantique auxiliaire, sensiblement tous les bits quantiques de chat de données étant connectés à au moins deux bits quantiques auxiliaires, et sensiblement tous les bits quantiques auxiliaires étant connectés à au moins deux bits quantiques de chat de données, de telle sorte qu'un chemin continu puisse être défini dans ledit circuit quantique supraconducteur de routage (5) qui connecte deux bits quantiques de chat de données quelconques et est composé de paires de bits quantiques de chat de données qui sont connectés via un bit quantique auxiliaire, ledit circuit quantique supraconducteur de LDPC (4) comprenant un bit quantique logique cible encodé dans un code de LDPC classique, dans lequel le bit quantique logique cible est associé à un groupe logique X de bits quantiques de chat de données dudit circuit quantique supraconducteur de LDPC (4) lesquels bits quantiques partagent un nombre impair de bits quantiques avec le groupe logique du bit quantique logique cible et un nombre pair de bits quantiques avec tous les autres groupes logiques du circuit quantique supraconducteur de LDPC, ledit circuit de commande (6) étant agencé, sur la base d'un code de répétition de contrôle dans ledit circuit quantique supraconducteur de routage (5) comprenant une succession de bits quantiques de chat de données et de bits quantiques auxiliaires :

a) pour définir un chemin de routage continu dans le circuit de routage de telle sorte qu'il inclue au moins une pluralité de bits quantiques de chat de données qui sont chacun adjacents à un bit quantique de chat de données respectif du code de répétition de contrôle,

b1) pour préparer tous les bits quantiques de chat de données dans ledit chemin de routage avec un état $|0\rangle$ ou un état $|1\rangle$, et les bits quantiques auxiliaires avec un état $|+\rangle$ ou un état $|-\rangle$,

b2) pour mesurer de manière répétée les stabilisateurs dans le chemin de routage pour préparer un code de répétition de routage dans un état $|0\rangle_L$ ou un état $|1\rangle_L$ dans le chemin de routage, et

b3) pour réaliser une porte CNOT avec chacun des bits quantiques de chat de données du groupe logique dudit code de répétition de contrôle étant le contrôle, chaque fois avec le bit quantique de chat de données adjacent correspondant du chemin de routage étant la cible,

c1) préparer le bit quantique cible de routage avec un état $|+\rangle$ (ou un état $|-\rangle$), et pour préparer le bit quantique auxiliaire connectant ledit bit quantique cible de routage et ledit bit quantique de chemin final avec un état $|0\rangle$ (ou un état $|1\rangle$),

c2) réaliser une première porte CNOT entre le bit quantique auxiliaire préparé et le bit quantique cible de routage, avec le premier étant la cible et le second étant le contrôle,

c3) réaliser une deuxième porte CNOT entre le bit quantique auxiliaire préparé et le bit quantique du chemin final, avec le premier étant le contrôle et le second étant la cible, et une troisième porte CNOT entre ledit bit quantique cible principal et ledit bit quantique cible de routage, avec le premier étant la cible et le second étant le contrôle,

c4) pour effectuer une opération de MX sur le bit quantique cible de routage voisin et le bit quantique auxiliaire préparé, et pour multiplier leur résultat afin de fournir un résultat de MXX,

d1) en fonction du résultat de MXX, dériver une porte Z quantique à réaliser sur les bits quantiques de chat de données du groupe logique du code de répétition de contrôle, et

d2) appliquer une mesure de l'opérateur Z sur tous les bits quantiques de chat de données dans ledit chemin de routage à l'exception des bits quantiques cibles de routage interne et, sur la base du résultat du produit des résultats, dériver une porte X quantique à réaliser sur les bits quantiques de chat de données du groupe logique X du bit quantique logique LDPC cible.

15. Système quantique selon l'une des revendications 1 à 6, pour réaliser une porte quantique, comprenant en outre un circuit quantique supraconducteur de routage (5) comprenant

un nombre n de résonateurs de données (8), chaque résonateur de données (8) présentant une fréquence de résonance respective et étant couplé audit circuit de commande (6) pour stabiliser un bit quantique de chat de données respectif, chacun desdits n résonateurs de données (8) dudit circuit quantique supraconducteur de routage (5) étant connecté à un résonateur de données respectif desdits n résonateurs de données (8) dudit circuit quantique supraconducteur de LDPC (4)

une pluralité de résonateurs auxiliaires (10), chaque résonateur auxiliaire présentant une fréquence de résonance auxiliaire couplée audit circuit de commande (6) pour stabiliser un bit quantique auxiliaire, sensiblement tous les bits quantiques de chat de données étant connectés à au moins deux bits quantiques auxiliaires, et sensiblement tous les bits quantiques auxiliaires étant connectés à au moins deux bits quantiques de chat de données, de telle sorte qu'un chemin continu puisse être défini dans ledit circuit quantique supraconducteur de routage (5) qui connecte deux bits quantiques de chat de données quelconques et est composé de paires de bits quantiques de chat de données qui sont connectés via un bit quantique auxiliaire, ledit circuit quantique supraconducteur de LDPC (4) comprenant un bit quantique logique cible encodé dans un code de LDPC classique, dans lequel le bit quantique logique cible est associé à un groupe logique X de bits quantiques de chat de données dudit circuit quantique supraconducteur de LDPC (4) lesquels bits quantiques partagent un nombre impair de bits quantiques avec le groupe logique du bit quantique logique cible et un nombre pair de bits quantiques avec tous les autres groupes logiques du circuit quantique supraconducteur de LDPC, ledit circuit de commande (6) étant agencé, sur la base d'un code de répétition de contrôle dans ledit circuit quantique supraconducteur de routage (5) comprenant une succession de bits quantiques de chat de données et de bits quantiques auxiliaires :

a) pour définir un chemin de routage continu dans le circuit de routage de telle sorte qu'il inclue au moins une pluralité de bits quantiques de chat de données qui sont chacun adjacents à un bit quantique de chat de données respectif du code de répétition de contrôle,

b1) pour préparer tous les bits quantiques de chat de données du chat dans ledit chemin de routage avec un état $|0\rangle$ ou un état $|1\rangle$, et les bits quantiques auxiliaires avec un état $|+\rangle$ ou un état $|-\rangle$,

b2) pour mesurer de manière répétée les stabilisateurs dans le chemin de routage pour préparer un code de répétition de routage dans un état $|0\rangle_L$ ou un état $|1\rangle_L$ dans le chemin de routage, et

b3) pour réaliser une porte CNOT avec chacun des bits quantiques de chat de données du groupe logique dudit code de répétition de contrôle étant le contrôle, chaque fois avec le bit quantique de chat de données adjacent correspondant du chemin de routage étant la cible,

c1) pour préparer un bit quantique cible de routage interne avec un état $|+\rangle$, et pour préparer les deux bits quantiques auxiliaires du chemin de routage entourant ces bits quantiques cibles de routage interne avec un état $|0\rangle$,

c2) pour réaliser une première porte CNOT entre la paire de bits quantiques auxiliaires préparés et le bit quantique cible de routage interne, avec le premier étant la cible et le second étant le contrôle,

c3) pour réaliser une deuxième porte CNOT entre la paire de bits quantiques auxiliaires préparés et deux bits quantiques de chat de données voisins dans le chemin de routage, avec le premier étant le contrôle et le second étant la cible, et une troisième porte CNOT entre le bit quantique de chat de données du circuit LDPC 4 connecté au bit quantique cible de routage interne et le bit quantique cible de routage interne correspondant, avec le premier étant la cible et le second étant le contrôle,

c4) pour effectuer une opération de MX sur le bit quantique cible de routage interne et la paire de bits quantiques auxiliaires du chemin de routage qui l'entoure, et pour multiplier leur résultat,

ledit circuit de commande (6) étant agencé pour réaliser les opérations c1) à c4) sur tous les bits quantiques cibles de routage interne, et étant en outre agencé

c5) pour préparer le bit quantique cible de routage avec un état $|+\rangle$, et pour préparer le bit quantique auxiliaire connectant le bit quantique cible de routage et le bit quantique de fin de chemin avec un état $|0\rangle$,

c6) pour réaliser une première porte CNOT entre le bit quantique auxiliaire préparé et le bit quantique cible de routage, avec le premier étant la cible et le second étant le contrôle,

c7) pour réaliser une deuxième porte CNOT entre le bit quantique auxiliaire préparé et le bit quantique de fin de chemin, avec le premier étant le contrôle et le second étant la cible, et une troisième porte CNOT entre le bit quantique de chat de données du circuit quantique supraconducteur de LDPC (4) connecté au bit quantique cible de routage et le bit quantique cible de routage, avec le premier étant la cible et le second étant le contrôle,

c8) pour réaliser une opération de MX sur le bit quantique cible de routage et le bit quantique auxiliaire préparé, et pour multiplier leur résultat,

ledit circuit de commande (6) étant en outre agencé pour multiplier les résultats de l'opération c4) ensemble et avec le résultat de l'opération c8) pour fournir un résultat de MXX,

d1) en fonction du résultat de MXX, pour dériver une porte Z quantique à réaliser sur les bits quantiques de chat de données du groupe logique du bit quantique logique de contrôle,

d2) pour appliquer une mesure de l'opérateur Z sur tous les bits quantiques de chat de données dans ledit chemin de routage à l'exception des bits quantiques cibles de routage interne, et, sur la base du résultat du produit des résultats, pour dériver une porte X quantique à réaliser sur les bits quantiques de chat de données du groupe logique X.

**Fig.1**

**Fig.2**

Data qubits    X stabilizer

**Fig.3**

Data qubits    X stabilizer

**Fig.4**

Fig.5

Fig.6

**Fig.7**

| $[n, k, d]$ | $kd/n$ | $(H, L)$ | Stabiliser shapes (bottom to top) |
|:---:|:---:|:---:|:---:|
| $[23, 10, 5]$ | 2.17 | $(4, 5)$ | |
| $[61, 22, 9]$ | 3.25 | $(5, 11)$ | |
| $[88, 26, 12]$ | 3.55 | $(6, 13)$ | |
| $[134, 34, 16]$ | 4.06 | $(7, 17)$ | |
| $[157, 34, 22]$ | 4.76 | $(8, 17)$ | |

**Fig.8**

**Fig.9**

**Fig.10**

**Fig.11**

**Fig.12**

**Fig.13**

**Fig.14**

**Fig.15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147

- EP 23305297 A

**Non-patent literature cited in the description**

- **JÉRÉMIE GUILLAUD ; MAZYAR MIRRAHIMI**. Repetition Cat Qubits for Fault-Tolerant Quantum Computation. *Phys. Rev. X*, 12 December 2019, vol. 9, 041053
- **SHRUTI et al.** Bias-Preserving Gates With Stabilized Cat Qubits. *Science Advances*, 21 August 2020, vol. 6 (34)
- **JÉRÉMIE GUILLAUD ; MAZYAR MIRRAHIMI**. Error Rates and Resource Overheads of repetition cat qubits. *Phys. Rev. A*, 13 April 2021, vol. 103, 042413

- **CHRISTOPHER CHAMBERLAND et al.** Building a Fault-Tolerant Quantum Computer Using Concatenated Cat Codes. *PRX Quantum*, 23 February 2022, vol. 3, 010329
- **ANDREW S. DARMAWAN et al.** Practical Quantum Error Correction with the XZZX Code and Kerr-Cat Qubits. *PRX Quantum*, 16 September 2021, vol. 2, 030345
- **S. BRAVI**. High-threshold and low-overhead fault-tolerant quantum memory. *arXiv:2308.07915*, 15 August 2023
- **XU et al.** Constant-Overhead Fault- Tolerant Quantum Computation with Reconfigurable Atom Arrays. *arXiv:2308.08648*